# EUROPÄISCHE PATENTSCHRIFT

(11) **EP 2 016 349 B1**
(45) Veröffentlichungstag und Bekanntmachung des Hinweises auf die Patenterteilung: **04.05.2011**
(21) Anmeldenummer: 06724016.8
(22) Anmeldetag: 04.04.2006
(51) Int. Cl.: F25B 30/00, F25B 30/06, F25D 31/00

(54) **WÄRMEPUMPE**
HEAT PUMP
POMPE A CHALEUR

(43) Veröffentlichungstag der Anmeldung: 21.01.2009
(60) Teilanmeldung: 10189256.0
(73) Patentinhaber: Efficient Energy GmbH, 82054 Sauerlach (DE)
(72) Erfinder: SEDLAK, Holger, 82054 Lochhofen/Sauerlach (DE); KNIFFLER, Oliver, 81739 München (DE)
(74) Vertreter: Zinkler, Franz
(86) Internationale Anmeldenummer: PCT/EP2006/003061
(87) Internationale Veröffentlichungsnummer: WO 2007/118482

(56) Entgegenhaltungen:
- EP-A- 1 380 799
- DE-A1- 4 431 887
- DE-A1- 19 820 818
- DE-A1-102004 001 927
- DE-C- 373 915
- GB-A- 929 790
- GB-A- 2 071 294
- GB-A- 2 337 795
- US-A1- 3 312 063
- US-A1- 4 003 213
- US-A1- 4 653 287
- US-A1- 4 831 836
- US-B1- 6 397 621

## Beschreibung

Die vorliegende Erfindung bezieht sich auf Wärmepumpen und insbesondere auf Wärmepumpen, die zur Gebäudeheizung und speziell zur Gebäudeheizung von kleineren Gebäudeeinheiten, wie beispielsweise Einfamilienhäusern, Doppelhäusern oder-Reihenhäusern eingesetzt werden können.

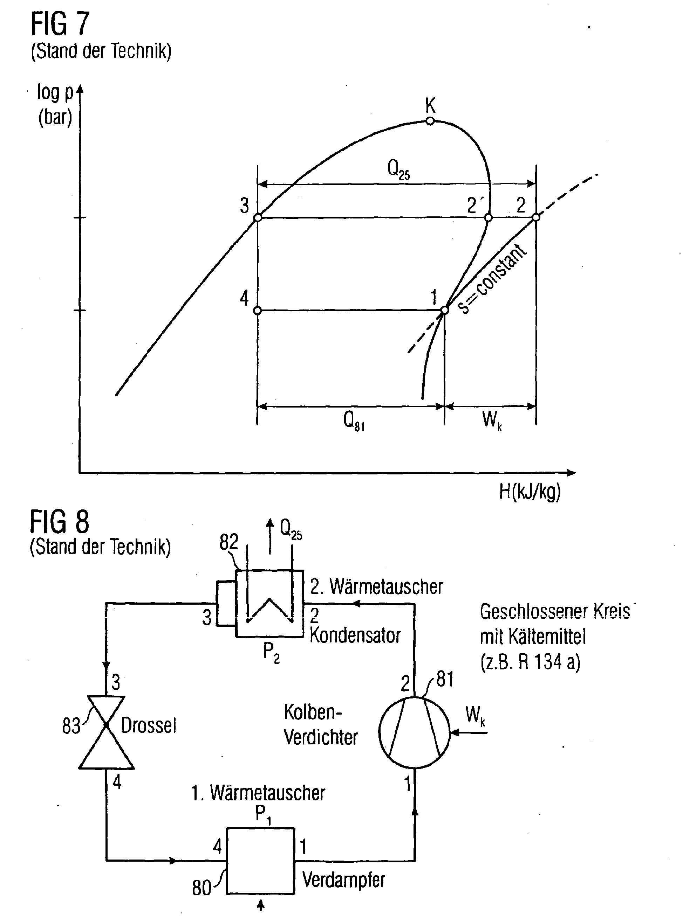

Fig. 8 zeigt eine bekannte Wärmepumpe, wie sie in "Technische Thermodynamik", Theoretische Grundlagen und praktische Anwendungen, 14. neu bearbeitete Auflage, Hanser Verlag, 2005, Seiten 278 - 279, beschrieben ist. Die Wärmepumpe umfasst einen geschlossen Kreislauf, in dem ein Arbeitsmittel, wie beispielsweise R 134a, zirkuliert. Über einen ersten Wärmetauscher 80 und den Verdampfer wird dem Erdreich bzw. Grundwasser soviel Wärme entzogen, dass das Arbeitsmittel verdampft. Das jetzt energiereiche Arbeitsmittel wird über die Saugleitung vom Verdichter abgesaugt. Im Verdichter 81 wird es komprimiert, wodurch Druck und Temperatur erhöht werden. Diese Kompression wird durch einen Kolbenverdichter durchgeführt. Das verdichtete und unter hoher Temperatur stehende Arbeitsmittel gelangt jetzt in den zweiten Wärmetauscher 82, den Verflüssiger. Im Verflüssiger wird dem Arbeitsmittel vom Heizung- oder Brauchwasserkreislauf so viel Wärme entzogen, dass das Kältemitttel unter hohem Druck und hoher Temperatur verflüssigt wird. Im Drossel- oder Expansionsorgan 83 wird das Arbeitsmittel expandiert, d.h. das Arbeitsmittel wird entspannt. Hierbei werden Druck und Temperatur so weit abgebaut, dass das Arbeitsmittel wieder in der Lage ist, im Verdampfer erneut Energie aus dem Erdreich oder Grundwasser aufzunehmen. Der Kreislauf ist jetzt geschlossen und beginnt von neuem.

Wie hieraus ersichtlich ist, dient das Arbeitsmittel als Energietransporteur um aus dem Erdreich bzw. Grundwasser Wärme aufzunehmen und diese im Verflüssiger an den Heizungskreislauf abzugeben. Bei dieser Prozessführung ist der 2. Hauptsatz der Thermodynamik erfüllt, in dem es heißt, dass Wärme bzw. Energie von "selbst" nur vom höheren Temperaturniveau auf das niedrigere Temperaturniveau übertragen werden kann, und dass dies umgekehrt nur durch äußere Energiezufuhr, hier die Antriebsarbeit des Verdichters, geschehen kann.

Fig. 7 zeigt ein typisches h, log p-Diagramm (h ist die Enthalpie, p der Druck eines Stoffes). Zwischen Punkt 4 und Punkt 1 im Diagramm von Fig. 7 findet eine isobare Verdampfung des Arbeitsmittels bei niedrigen Werten für den Druck und die Temperatur (p₁, T₁) statt. hier wird die Wärme Q₈₁ zugeführt.

Zwischen Punkt 1 und Punkt 2 findet idealerweise eine reversible Verdichtung des Arbeitsmitteldampfes in einem adiabaten Verdichter auf den Druck p₂ statt. Dabei steigt die Temperatur auf T₂. Es ist hier eine Verdichtungsarbeit zuzuführen.

Dann wird bei hohem Druck p₂ zunächst eine isobare Kühlung des Arbeitsmitteldampfes von 2 auf 2' durchgeführt. Die Überhitzung wird abgebaut. Anschließend findet eine Verflüssigung des Arbeitsmittels statt. Insgesamt kann die Wärme Q₂₅ abgeführt werden.

In der Drossel 83 findet dann die adiabate Drosselung des Arbeitsmittels vom hohen Druck p₂ auf den niedrigen Druck p₁ statt. Dabei verdampft ein Teil des flüssigen Arbeitsmittels und die Temperatur verringert sich auf die Verdampfungstemperatur T₁. In dem h, log p-Diagramm können die Energien und Kennzahlen dieses Prozesses mittels Enthalpien berechnet werden und veranschaulicht werden, wie es in Fig. 7 gezeigt ist.

Das Arbeitsfluid der Wärmepumpe nimmt somit im Verdampfer Wärme aus der Umgebung, d. h. Luft, Wasser, Abwasser oder Erdboden, auf. Der Verflüssiger dient als Wärmeübertrager zum Erwärmen eines Heizmittels. Die Temperatur T₁ liegt etwas unter der Umgebungstemperatur die Temperatur T₂ erheblich, die Temperatur T₂' etwas über der benötigten Heizungstemperatur. Je höher die geforderte Temperaturdifferenz ist, umso mehr Arbeit muss der Verdichter aufbringen. Man ist daher bestrebt, die Temperaturerhöhung so klein wie möglich zu halten.

Bezugnehmend auf Fig. 7 wird somit im idealen Fall eine Verdichtung der Arbeitsstoffdämpfe entlang der Kurve für die Entropie s = konstant bis zum Punkt 2 durchgeführt. Von hier bis Punkt 3 verflüssigt sich der Arbeitsstoff. Die Länge der Strecke 2-3 stellt die Nutzwärme Q dar. Vom Punkt 3 bis zum Punkt 4 erfolgt die Entspannung und von Punkt 4 bis Punkt 1 die Verdampfung des Arbeitsstoffes, wobei die Strecke 4-1 die der Wärmequelle entzogene Wärme wiedergibt. Im Gegensatz zum T, s-Diagramm können beim h, log p-Diagramm die Beträge der Wärme und der Arbeit als Strecken entnommen werden. Druckverluste in Ventilen, den Druck- und Saugleitungen, des Verdichters usw. verformen den idealen Verlauf des Kreisprozesses im h, log p-Diagramm und reduzieren die Effektivität des gesamten Prozesses.

Bei Kolben-Verdichtern hat der angesaugte Arbeitsstoffdampf zunächst eine niedrigere Temperatur als die Zylinderwandung des Verdichters und nimmt Wärme aus ihr auf. Mit fortschreitender Verdichtung erhöht sich schließlich die Temperatur des Arbeitsstoffdampfes über die der Zylinderwandung, so dass der Arbeitsstoffdampf Wärme an die Zylinderwandung abgibt. Dann, wenn der Kolben erneut Dampf ansaugt und verdichtet, wird die Temperatur der Kolbenwandung zunächst wieder unterschritten und dann überschritten, was zu dauernden Verlusten führt. Ferner wird eine Überhitzung des angesaugten Arbeitsstoffdampfes nötig und erforderlich sein, damit der Verdichter keinen flüssigen Arbeitsstoff ansaugt. Nachteilig ist insbesondere auch der Wärmeaustausch mit dem Ölkreislauf des Kolbenverdichters, welcher zur Schmierung unverzichtbar ist.

Auftretende Irreversibilitäten, wie Wärmeverluste bei der Verdichtung, Druckverluste in den Ventilen und Strömungsverluste in der Druckleitung zum Verflüssigen und in dem Verflüssiger erhöhen die Entropie, also die Wärme, die nicht mehr wiedergewonnen werden kann. Ferner liegt auch die Temperatur T₂ über der Verflüssigungstemperatur. Eine solche "Überhitzungsenthalpie" ist unerwünscht, besonders, weil die dabei auftretenden hohen Temperaturen die Alterung des Verdichters und insbesondere des Schmieröls bei einem Kolben-Verdichter beschleunigen. Auch wird die Effektivität des Prozesses gemindert.

Der verflüssigte Arbeitsstoff auf niedriger Temperatur am Ausgang des Verflüssigers müsste im Rahmen eines idealen Kreisprozesses über eine Kraftmaschine, beispielsweise Turbine, entspannt werden, um den Überschuss an Energie, der gegenüber dem Zustand bei der Temperatur und dem Druck vor dem Verdichten bestand, zu nützen. Aus Gründen des hierfür erforderlichen großen Aufwands unterbleibt diese Maßnahme und der Druck des Arbeitsstoffes wird durch die Drossel 83 schlagartig auf den niedrigen Druck und die niedrige Temperatur herabgesetzt. Die Enthalpie des Arbeitsstoffes bleibt hierbei angenähert gleich. Durch die schlagartige Druckminderung muss der Arbeitsstoff teilweise verdampfen, um seine Temperatur abzusenken. Die notwendige Verdampfungswärme stammt aus dem auf Übertemperatur befindlichen Arbeitsstoff, wird also nicht der Wärmequelle entzogen. Die Gesamtheit der durch die Entspannung in der Drossel 83 (Fig. 8) hervorgerufenen Verluste wird als Entspannungsverluste bezeichnet. Es handelt sich dabei um Exergie-Verluste, weil Wärme der Temperatur T in Wärme der Temperatur T₀ umgewandelt wird. Diese Verluste lassen sich vermindern, wenn der flüssige Arbeitsstoff seine Wärme an ein Medium einer Temperatur kleiner als T abgeben kann. Diese Unterkühlungsenthalpie lässt sich durch einen inneren Wärmeaustausch nutzbar machen, der jedoch ebenfalls wieder zusätzlichen Geräteaufwand erfordert. Auch prinzipiell ist dem inneren Wärmeaustausch eine Grenze gesetzt, weil bei der Verdichtung der Dämpfe die Überhitzungstemperatur T₂ ansteigt, wodurch die erzielten Gewinne teilweise wieder ausgeglichen werden, und auch Maschine und Schmieröl thermisch verstärkt beansprucht werden. Schließlich steigt durch die Überhitzung das Volumen des Dampfes an, wodurch sich die volumetrische Heizleistung vermindert. Man nutzt diese Wärme nur zum Vorwärmen der zum Verdichter strömenden Dämpfe des Arbeitsstoffs soweit aus, wie es notwendig ist, damit alle im Dampf des Arbeitsmediums enthaltenen Tröpfchen mit Sicherheit in Dampf umgewandelt sind. Generell kann man sagen, dass das Verhältnis der Enthalpie-Differenz zwischen dem Punkt 1 und dem Punkt 4 zu der Enthalpie-Differenz zwischen dem Punkt 2 und dem Punkt 1 des h, log p-Diagramms ein Maß für die Wirtschaftlichkeit des Wärmepumpen-Prozesses ist.

Ein derzeit populäres Arbeitsmittel ist R134a, das als chemische Formel CF₃-CH₂F hat. Hier handelt es sich um ein Arbeitsmittel, das zwar nicht mehr ozonschädigend ist, das jedoch im Hinblick auf den Treibhauseffekt eine 1000 mal stärkere Wirkung als Kohlendioxid hat. Das Arbeitsmittel R134a wird jedoch gerne verwendet, da es eine relativ große Enthalpie-Differenz von etwa 150 kJ/kg hat.

Obgleich dieses Arbeitsmittel kein "Ozonkiller" mehr ist, existieren dennoch erhebliche Anforderungen an die Geschlossenheit des Wärmepumpen-Kreislaufs, derart, dass aus diesem geschlossenen Kreislauf keine Arbeitsmittel-Moleküle austreten, da diese ganz erhebliche Schäden aufgrund des Treibhauseffekts anrichten würden. Diese Kapselung verursacht erhebliche Zusatzkosten beim Bau einer Wärmepumpe.

Ferner ist davon auszugehen, dass bis zur Umsetzung der nächsten Stufe des Kyoto-Protokolls aufgrund des Treibhaus-Effekts bis zum Jahre 2015 auch R134a verboten wird, was auch schon früheren mit wesentlich schädlicheren Mitteln geschehen ist.

Nachteilig an bestehenden Wärmepumpen ist daher neben der Tatsache des schädlichen Arbeitsmittels auch die Tatsache, dass aufgrund der vielen Verluste im Wärmepumpenkreislauf der Wirkungsgrad der Wärmepumpe typischerweise nicht über einen Faktor 3 liegt. Anders ausgedrückt, kann man etwa das 2-fache der Energie, die für den Verdichter eingesetzt worden ist, aus der Wärmequelle, wie beispielsweise dem Grundwasser oder dem Erdreich entnehmen. Wenn man nunmehr Wärmepumpen betrachtet, bei denen der Verdichter mit elektrischem Strom angetrieben wird, und wenn man gleichzeitig berücksichtigt, dass der Wirkungsgrad bei der Stromerzeugung vielleicht gleich 40 % ist, so stellt sich heraus, dass - im Hinblick auf die gesamte Energiebilanz - eine Wärmepumpe vom Nutzen her zweifelhaft ist. Bezogen auf den Primärenergieträger werden 120 % = 3 40 % an Heizenergie bereit gestellt. Eine konventionelle Heizanlage mit einem Brenner kommt immerhin auf Wirkungsgrade von 90 - 95 %, d.h. mit einem hohen technischen und damit finanziellen Aufwand wird lediglich eine Verbesserung von 25 - 30 % erreicht.

Bessere Systeme verwenden zum Antrieb des Verdichters Primärenergie. Es wird also Gas oder Öl verbrannt, um mit der durch die Verbrennung frei werdenden Energie die Verdichterleistung zu schaffen. Vorteilhaft an dieser Lösung ist, dass die Energiebilanz tatsächlich positiver wird. Dies hat als Grund, dass als Antriebsenergie zwar lediglich ca. nur 30 % des Primärenergieträgers gewonnen werden können, aber dafür die Abwärme von dann ca. 70 % mit zur Heizung herangezogen werden kann. Die bereitgestellte Heizenergie beträgt dann 160 % = 3 30 % + 70 % des Primärenergieträgers. Nachteilhaft an dieser Lösung ist jedoch, dass, ein Haushalt, obgleich er keine klassische Heizung mehr hat, dennoch einen Verbrennungsmotor und ein Treibstofflager benötigt. Der Aufwand für Motor und Treibstofflager kommen noch zum Aufwand für die Wärmepumpe hinzu, die ja ein hoch-geschlossener Kreislauf aufgrund des klimaschädigenden Kühlmittels ist.

Alle diese Dinge haben dazu geführt, dass sich Wärmepumpen in der Konkurrenz zu anderen Heizungsarten nur bedingt behaupten können.

Die DE 44 31 887 A1 offenbart eine Wärmepumpenanlage gemäß dem Oberbegriff des Anspruchs 1 mit einem propellerähnlichen Drehteil, das aus einer kegelstumpfförmigen Nabe und einer Vielzahl von gekrümmten Schaufeln besteht. Ferner ist ein mechanisches Wasserdampf-Kompressions-Wärmepumpensystem geschaffen, das ein Paar Zentrifugalkompressoren aufweist.

Die DE 10 2004 001 927 A1 offenbart ein Verfahren zur Wärmerückgewinnung mittels einer Wärmepumpe, bei dem ein Schraubenverdichter mit Ölkühlung und Öleinspritzung sowie Wasser als Kältemittel zum Einsatz kommen.

Das US-Patent Nr. 4,003,213 offenbart ein Wärmepumpensystem gemäß dem Oberbegriff des Anspruchs 1 das zur Erzeugung von Trinkwasser geeignet ist, und bei dem die thermische Energie aus Wärme erzeugt wird, die durch das Gefrieren von Wasser unter Vakuum am Triple-Punkt frei wird.

Die US 6,397,621 B1 offenbart eine Wärmepumpeninstallation gemäß dem Oberbegriff des Anspruchs 1 mit einer Kühlfunktion, bei der das thermodynamische Fluid, das in dem Zyklus verwendet wird, Wasser ist. Eine dynamische Kompression in zwei getrennten Kompressionsstufen wird verwendet, wobei die Kompressionsstufen miteinander durch zumindest eine Zone mit einer Verhinderung einer Überhitzung verbunden sind.

Die Aufgabe der vorliegenden Erfindung besteht darin, ein effizienteres Wärmepumpenkonzept zu schaffen.

Diese Aufgabe wird durch eine Wärmepumpe gemäß Patentanspruch 1, oder ein Verfahren zum Pumpen von Wärme gemäß Patentanspruch 9 gelöst.

Der vorliegenden Erfindung liegt die Erkenntnis zugrunde, dass von klimaschädigenden Arbeitsmitteln weggegangen werden muss, und dass statt dessen normales Wasser ein optimales Arbeitsmittel ist. Im Vergleich zu dem derzeit häufig verwendeten Arbeitsmittel R134a hat Wasser zudem ein wesentlich größeres Verhältnis der Enthalpie-Differenzen. Die Enthalpie-Differenz, die dafür entscheidend ist, wie groß die Effektivität des Wärmepumpen-Prozesses ist, beträgt bei Wasser etwa 2500 kJ/kg, was etwa 16 mal so groß ist wie die nutzbare Enthalpie-Differenz von R134a. Die aufzuwendende Verdichter-Enthalpie ist dagegen nur 4 - 6 mal so groß, je nach Arbeitspunkt.

Darüber hinaus ist Wasser nicht klimaschädigend, also weder ein Ozonkiller noch ein Treibhauseffekt-Verschärfer. Dies ermöglicht es, dass Wärmepumpen erheblich einfacher gebaut werden können, da die Anforderungen an die Geschlossenheit des Kreislaufs nicht hoch sind. Statt dessen wird es sogar bevorzugt, von dem geschlossenen Prozess ganz wegzugehen und statt dessen einen offenen Prozess zu machen, bei dem das Grundwasser bzw. das Wasser, das die äußere Wärmequelle darstellt, direkt verdampft wird.

Erfindungsgemäß ist der Verdampfer derart ausgebildet, dass er einen Verdampfungsraum aufweist, in dem der Verdampfungsdruck kleiner als 20 hPa (Hektopascal) ist, so dass das Wasser bei Temperaturen unter 18°C und vorzugsweise unter 15°C verdampft. Typisches Grundwasser hat in der nördlichen Hemisphäre Temperaturen zwischen 8 und 12°C, was Drücke von unter 20 hPa erfordert, damit das Grundwasser verdampft, um durch das Grundwasserverdampfen eine Absenkung der Temperatur des Grundwassers und damit einen Wärmeentzug erreichen zu können, durch den eine Gebäudeheizung, wie beispielsweise eine Fußbodenheizung betrieben werden kann.

Wasser ist ferner dahingehend von Vorteil, dass Wasserdampf ein sehr großes Volumen einnimmt, und dass damit zum Verdich ten des Wasserdampfes nicht mehr auf eine Verdrängungsmaschine wie eine Kolbenpumpe oder etwas ähnliches zurückgegriffen werden muss, sondern ein Hochleistungsverdichter in Form einer Strömungsmaschine wie eines Radialverdichters eingesetzt werden kann, der in der Technik gut beherrschbar ist und im Hinblick auf seine Herstellung preisgünstig ist, da er in hohen Stückzahlen existiert und beispielsweise als Kleinturbine oder als Turboverdichter in Autos bisher eingesetzt wird.

Ein prominenter Vertreter der Klasse von Strömungsmaschinen im Vergleich zu Verdrängungsmaschinen ist der Radialverdichter beispielsweise in Form eines Turboverdichters mit Radialrad.

Der Radialverdichter bzw. die Strömungsmaschine muss wenigstens eine Verdichtung erreichen, dass der Ausgangsdruck aus dem Radialverdichter um 5 hPa höher als der Eingangsdruck in den Radialverdichter ist. Vorzugsweise wird jedoch eine Verdichtung in einem Verhältnis größer als 1:2 und sogar größer als 1:3 sein.

Strömungsmaschinen haben ferner im Vergleich zu typischerweise in geschlossenen Kreisläufen verwendeten Kölbenverdichtern den Vorteil, dass die Verdichter-Verluste aufgrund des bestehenden Temperaturgradienten in der Strömungsmaschine im Vergleich zu einer Verdrängungsmaschine (Kolbenverdichter), bei der ein solcher stehender Temperaturgradient nicht existiert, stark reduziert sind. Besonders vorteilhaft ist, dass ein Ölkreislauf komplett entfällt.

Ferner werden mehrstufige Strömungsmaschinen besonders bevorzugt, um die relativ hohe Verdichtung zu erreichen, die, um auch für kalte Wintertage eine ausreichende Vorlauftemperatur einer Heizung zu erreichen, den Faktor 8 bis 10 haben sollte.

Bei einem bevorzugten Ausführungsbeispiel wird ein komplett offener Kreislauf eingesetzt, in dem Grundwasser auf den niedrigen Druck gebracht wird. Ein bevorzugtes Ausführungsbeispiel zum Erzeugen eines Drucks unter 20 hPa für Grundwasser besteht in der einfachen Verwendung eines Steigrohrs, das in einen druckdichten Verdampfungsraum mündet. Überwindet das Steigrohr eine Höhe zwischen 9 und 10 m, so ist im Verdampfungsraum der erforderliche niedrige Druck vorhanden, bei dem das Grundwasser bei einer Temperatur zwischen 7 und 12°C verdampft. Nachdem typische Gebäude wenigstens 6 bis 8 m hoch sind, und nachdem in vielen Regionen das Grundwasser bereits bei 2 bis 4 m unter der Erdoberfläche vorhanden ist, führt die Installation eines solchen Rohrs zu keinem erheblichen zusätzlichen Aufwand, da nur etwas tiefer als für das Hausfundament gegraben werden muss, und da typische Gebäudehöhen ohne weiteres so hoch sind, dass das Steigrohr bzw. die Verdampfungskammer nicht über das Gebäude hinaus vorsteht.

Für Anwendungsfälle, bei denen nur ein kürzeres Steigrohr möglich ist, kann die Länge des Steigrohrs ohne weiteres durch eine Pumpen/Turbinenkombination reduziert werden, die aufgrund der Tatsache, dass die Turbine für die Umsetzung vom hohen auf den niedrigen Druck und die Pumpe für die Umsetzung von dem niedrigen Druck auf den hohen Druck verwendet wird, nur eine geringe zusätzliche Arbeit von außen benötigt.

Damit werden Primär-Wärmetauscherverluste eliminiert, da kein Primär-Wärmetauscher eingesetzt wird, sondern das verdampfte Grundwasser direkt als Arbeitsdampf bzw. Arbeitsmittel verwendet wird.

Bei einem bevorzugten Ausführungsbeispiel wird auch im Verflüssiger kein Wärmetauscher verwendet. Statt dessen wird der aufgrund seiner Kompression erhitzte Wasserdampf direkt in einem Verflüssiger in das Heizungswasser eingeführt, so dass innerhalb des Wassers eine Verflüssigung des Wasserdampfes stattfindet, derart, dass auch Sekundär-Wärmetauscher-Verluste eliminiert sind.

Die erfindungsgemäße Wasserverdampfer-Strömungsmaschinen-Verflüssiger-Kombination ermöglicht somit im Vergleich zu üblichen Wärmepumpen Wirkungsgrade von mindestens Faktor 6. Es kann also mindestens das 5-fache der bei der Verdichtung aufgewendeten elektrischen Energie aus dem Grundwasser entzogen werden, so dass selbst dann, wenn die Strömungsmaschine mit elektrischem Strom betrieben wird, eine Heizenergie von 240 % = 6 40 % bezogen auf den Primärenergieträger bereitgestellt wird. Dies ist mindestens eine Verdopplung der Effizienz verglichen mit dem Stand der Technik, oder verglichen mit den Energiekosten eine Halbierung. Dies gilt insbesondere auch für den klimarelevanten Ausstoß von Kohlendioxid.

Bevorzugte Ausführungsbeispiele der vorliegenden Erfindung werden nachfolgend bezugnehmend auf die beiliegenden Zeichnungen detailliert erläutert. Es zeigen:
- Fig. 1a: ein prinzipielles Blockschaltbild der erfindungsgemä- ßen Wärmepumpe;
- Fig. 1b: eine Tabelle zur Illustration verschiedener Drücke und der diesen Drücken zugeordneten Verdampfungstem- peraturen;
- Fig. 2: ein Blockschaltbild eines bevorzugten Ausführungsbei- spiels der erfindungsgemäßen Wärmepumpe, die mit Grundwasser, Meerwasser, Flusswasser, Seewasser oder Sole betrieben wird;
- Fig. 3a: eine alternative Ausführungsform des Verflüssigers von Fig. 2;
- Fig. 3b: eine alternative Ausführungsform des Verflüssigers mit reduziertem Rücklauf im Aus-Betrieb;
- Fig. 3c: eine schematische Darstellung des Verflüssigers mit einem Gasabscheider;
- Fig. 4a: eine bevorzugte Implementierung des Verdampfers von Fig. 2;
- Fig. 4b: eine alternative Ausführungsform des Verdampfers mit Verwendung des Verflüssiger-Ablaufs als Siedeunter- stützung;
- Fig. 4c: eine alternative Ausführungsform des Verdampfers mit einem Wärmetauscher zur Verwendung von Grundwasser zur Siedeunterstützung;
- Fig. 4d: eine alternative Ausführungsform des Verdampfers mit Einspeisung von der Seite und Ablauf in der Mitte;
- Fig. 4e: eine schematische Darstellung des Aufweiters mit An- gabe bevorzugter Maße;
- Fig. 5a: eine alternative Implementierung des Verdampfers zur Reduzierung der Höhe des Steigrohrs;
- Fig. 5b: eine Implementierung einer alternativen Realisierung eines Anschlusses einer Heizungsleitung an den Verflüssiger mit einer Turbinen/Pumpenkombination;
- Fig. 6a: eine schematische Darstellung des Verdichters ausge- führt durch mehrere hintereinander angeordnete Strö- mungsmaschinen;
- Fig. 6b: eine schematische Darstellung der Einstellung der Drehzahlen von zwei kaskadierten Strömungsmaschinen in Abhängigkeit von der Soll-Temperatur;
- Fig. 6c: eine schematische Draufsicht eines Radialrads einer Strömungsmaschine gemäß einem bevorzugten Ausfüh- rungsbeispiel der vorliegenden Erfindung;
- Fig. 6d: eine schematische Querschnittsansicht mit einer le- diglich schematischen Darstellung der Radialrad- Schaufeln zur Veranschaulichung der unterschiedlichen Erstreckung der Schaufeln im Hinblick auf den Radius des Radialrads;
- Fig. 7: ein beispielhaftes h, log p-Diagramm; und

- Fig. 8: eine bekannte Wärmepumpe, die den linksläufigen Kreislauf von Fig. 7 durchführt.

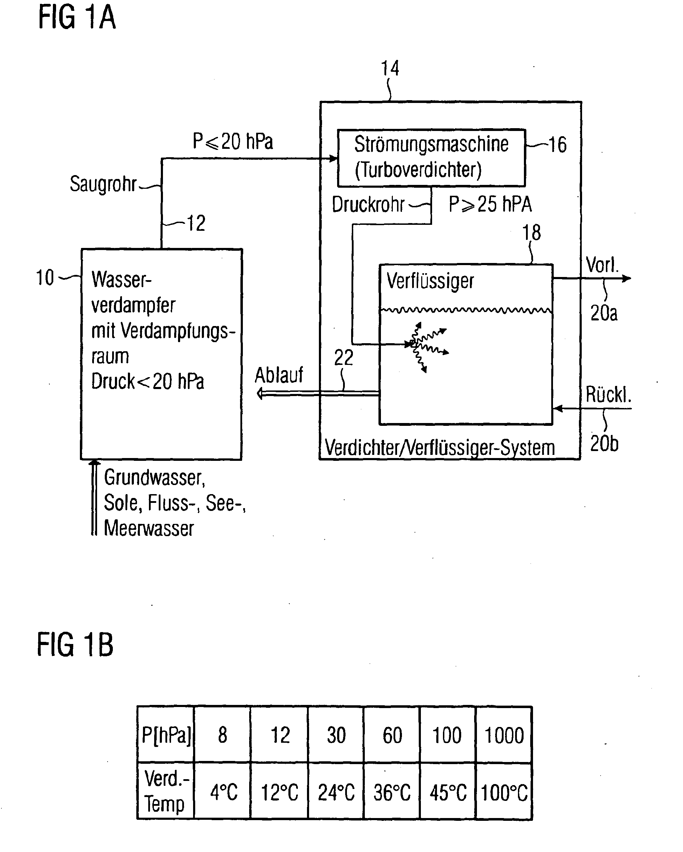

Fig. 1a zeigt eine erfindungsgemäße Wärmepumpe, die zunächst einen Wasserverdampfer 10 zum Verdampfen von Wasser als Arbeitsflüssigkeit aufweist, um ausgangsseitig einen Dampf in einer Arbeitsdampfleitung 12 zu erzeugen. Der Verdampfer umfasst einen Verdampfungsraum (in Fig. 1a nicht gezeigt) und ist ausgebildet, um in dem Verdampfungsraum einen Verdampfungsdruck kleiner als 20 hPa zu erzeugen, so dass das Wasser bei Temperaturen unter 15°C im Verdampfungsraum verdampft. Das Wasser ist vorzugsweise Grundwasser, im Erdreich frei oder in Kollektorrohren zirkulierende Sole, also Wasser mit einem bestimmten Salzgehalt, Flusswasser, Seewasser oder Meerwasser. Erfindungsgemäß werden alle Arten von Wasser, also kalkhaltiges Wasser, kalkfreies Wasser, salzhaltiges Wasser oder salzfreies Wasser verwendbar bevorzugt. Dies liegt daran, dass alle Arten von Wasser, also alle diese "Wasserstoffe", die günstige Wasser-Eigenschaft haben, nämlich dass Wasser, das auch als "R 718" bekannt ist, eine für den Wärmepumpen-Prozess nutzbares Enthalpie-Differenz-Verhältnis von 6 hat, was dem mehr als 2-fachen des typischen nutzbaren Enthalpie-Differenz-Verhältnisses von z. B. R134a entspricht.

Der Wasserdampf wird durch die Saugleitung 12 einem Verdichter/Verflüssiger-System 14 zugeführt, das eine Strömungsmaschine wie z. B. einen Radialverdichter, beispielsweise in Form eines Turboverdichters aufweist, der in Fig. 1a mit 16 bezeichnet ist. Die Strömungsmaschine ist ausgebildet, um den Arbeitsdampf auf einen Dampfdruck zumindest größer als 25 hPa zu verdichten. 25 hPa korrespondiert mit einer Verflüssigungstemperatur von etwa 22°C, was zumindest an relativ warmen Tagen bereits eine ausreichende Heizungs-Vorlauftemperatur einer Fußbodenheizung sein kann. Um höhere Vorlauftemperaturen zu generieren, können Drücke größer als 30 hPa mit der Strömungsmaschine 16 erzeugt werden, wobei ein Druck von 30 hPa eine Verflüssigungstemperatur von 24°C hat, ein Druck von 60 hPa eine Verflüssigungstemperatur von 36°C hat, und ein Druck von 100 hPa einer Verflüssigungstemperatur von 45°C entspricht. Fußbodenheizungen sind ausgelegt, um mit einer Vorlauftemperatur von 45°C auch an sehr kalten Tagen ausreichend heizen zu können.

Die Strömungsmaschine ist mit einem Verflüssiger 18 gekoppelt, der ausgebildet ist, um den verdichteten Arbeitsdampf zu verflüssigen. Durch das Verflüssigen wird die in dem Arbeitsdampf enthaltene Energie dem Verflüssiger 18 zugeführt, um dann über den Vorlauf 20a einem Heizsystem zugeführt zu werden. Über den Rücklauf 20b fließt das Arbeitsfluid wieder in den Verflüssiger zurück.

Erfindungsgemäß wird es bevorzugt, dem energiereichen Wasserdampf direkt durch das kältere Heizungswasser die Wärme (-energie) zu entziehen, welche vom Heizungswasser aufgenommen wird, so dass dieses sich erwärmt. Dem Dampf wird hierbei so viel Energie entzogen, dass dieser verflüssigt wird und ebenfalls am Heizungskreislauf teilnimmt.

Damit findet ein Materialeintrag in den Verflüssiger bzw. das Heizungssystem statt, der durch einen Ablauf 22 reguliert wird, derart, dass der Verflüssiger in seinem Verflüssigerraum einen Wasserstand hat, der trotz des ständigen Zuführens von Wasserdampf und damit Kondensat immer unterhalb eines Maximalpegels bleibt.

Wie es bereits ausgeführt worden ist, wird es bevorzugt, einen offenen Kreislauf zu nehmen, also das Wasser, das die Wärmequelle darstellt, direkt ohne Wärmetauscher zu verdampfen. Alternativ könnte jedoch auch das zu verdampfende Wasser zunächst über einen Wärmetauscher von einer externen Wärmequelle aufgeheizt werden. Dabei ist jedoch zu bedenken, dass dieser Wärmetauscher wieder Verluste und apparativen Aufwand bedeutet.
Darüber hinaus wird es bevorzugt, um auch Verluste für den zweiten Wärmetauscher, der auf Verflüssiger-Seite bisher notwendigerweise vorhanden ist, zu vermeiden, auch dort das Medium direkt zu verwenden, also, wenn an ein Haus mit Fußbodenheizung gedacht wird, das Wasser, das von dem Verdampfer stammt, direkt in der Fußbodenheizung zirkulieren zu lassen.

Alternativ kann jedoch auch auf Verflüssiger-Seite ein Wärmetauscher angeordnet werden, der mit dem Vorlauf 20a gespeist wird und der den Rücklauf 20b aufweist, wobei dieser Wärmetauscher das im Verflüssiger befindliche Wasser abkühlt und damit eine separate Fußbodenheizungsflüssigkeit, die typischerweise Wasser sein wird, aufheizt.

Aufgrund der Tatsache, dass als Arbeitsmedium Wasser verwendet wird, und aufgrund der Tatsache, dass von dem Grundwasser nur der verdampfte Anteil in die Strömungsmaschine eingespeist wird, spielt der Reinheitsgrad des Wassers keine Rolle. Die Strömungsmaschine wird, genauso wie der Verflüssiger und die ggf. direkt gekoppelte Fußbodenheizung immer mit destilliertem Wasser versorgt, derart, dass das System im Vergleich zu heutigen Systemen einen reduzierten Wartungsaufwand hat. Anders ausgedrückt ist das System selbstreinigend, da dem System immer nur destilliertes Wasser zugeführt wird und das Wasser im Ablauf 22 somit nicht verschmutzt ist.

Darüber hinaus sei darauf hingewiesen, dass Strömungsmaschinen die Eigenschaften haben, dass sie - ähnlich einer Flugzeugturbine - das verdichtete Medium nicht mit problematischen Stoffen, wie beispielsweise Öl, in Verbindung bringen. Statt dessen wird der Wasserdampf lediglich durch die Turbine bzw. den Turboverdichter verdichtet, jedoch nicht mit Öl oder einem sonstigen Reinheits-beeinträchtigenden Medium in Verbindung gebracht und damit verunreinigt.

Das durch den Ablauf abgeführte destillierte Wasser kann somit - wenn keine sonstigen Vorschriften im Wege stehen - ohne weiteres dem Grundwasser wieder zugeführt werden. Alternativ kann es hier jedoch auch z. B. im Garten oder in einer Freifläche versickert werden, oder es kann über den Kanal, sofern dies Vorschriften gebieten - einer Kläranlage zugeführt werden.

Die erfindungsgemäße Kombination von Wasser als Arbeitsmittel mit dem um das 2-fache besseren nutzbaren Enthalpie-Differenz-Verhältnis im Vergleich zu R134a und aufgrund der damit reduzierten Anforderungen an die Geschlossenheit des Systems (es wird vielmehr ein offenes System bevorzugt), und aufgrund des Einsatzes der Strömungsmaschine, durch den effizient und ohne Reinheitsbeeinträchtigungen die erforderlichen Verdichtungsfaktoren erreicht werden, wird ein effizienter und umweltneutraler Wärmepumpenprozess geschaffen, der dann, wenn im Verflüssiger der Wasserdampf direkt verflüssigt wird, noch effizienter wird, da dann im gesamten Wärmepumpenprozess kein einziger Wärmetauscher mehr benötigt wird.

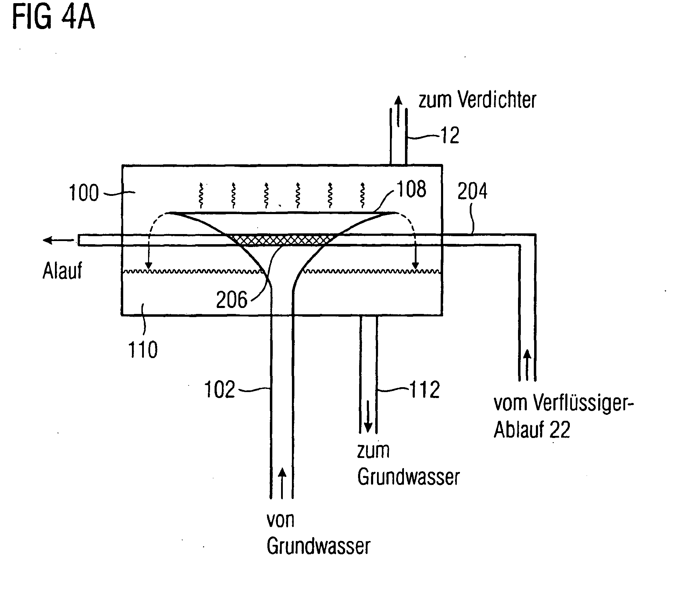

Darüber hinaus fallen sämtliche mit der Kolbenverdichtung verbundenen Verluste weg. Zudem können die bei Wasser sehr gering ausfallenden Verluste, die sonst bei der Drosselung anfallen, dazu verwendet werden, den Verdampfungsprozess zu verbessern, da das Ablaufwasser mit der Ablauftemperatur, die typischerweise höher als die Grundwasser-Temperatur sein wird, vorteilhaft verwendet werden, um im Verdampfer mittels einer Strukturierung 206 eines Ablaufrohrs 204, wie es in Fig. 4a noch erläutert wird, eine Blasenverdampfung zu triggern, damit die Verdampfungseffizienz erhöht wird.

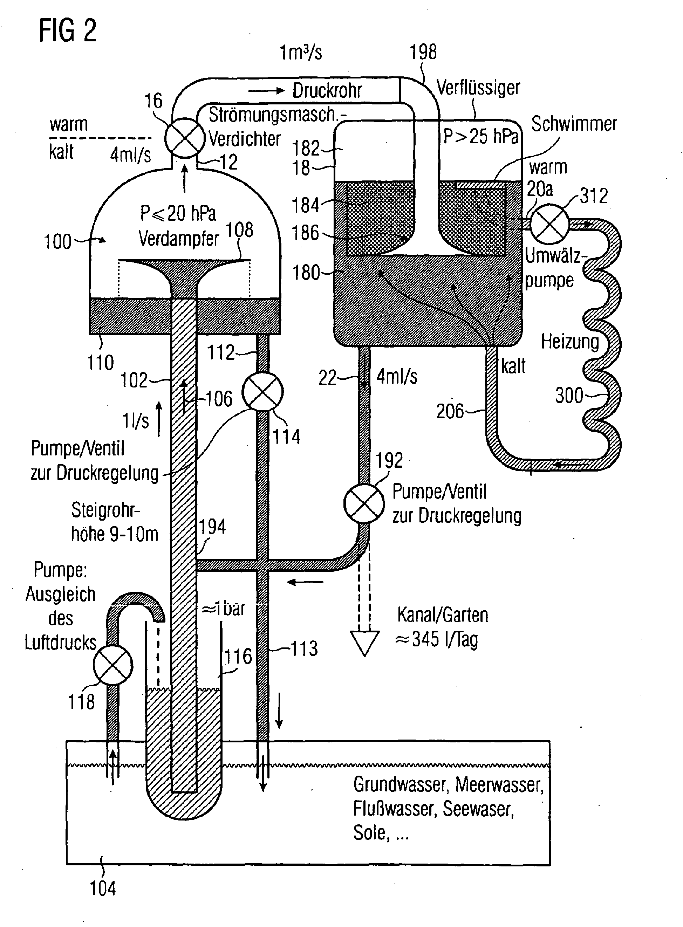

Nachfolgend wird bezugnehmend auf Fig. 2 ein bevorzugtes Ausführungsbeispiel der vorliegenden Erfindung detailliert erläutert. Der Wasserverdampfer umfasst eine Verdampfungskammer 100 und ein Steigrohr 102, in dem sich Grundwasser von einem Grundwasser-Reservoir 104 in Richtung eines Pfeils 106 nach oben in den Verdampfungsraum 100 bewegt. Das Steigrohr 102 mündet in einem Aufweiter 108, der ausgebildet ist, um den relativ engen Rohrquerschnitt aufzuweiten, um eine möglichst große Verdampfungsfläche zu schaffen. Der Aufweiter 108 wird trichterförmig, also in Form eines Rotationsparaboloids beliebiger Ausprägung sein. Er kann runde oder eckige Übergänge haben. Entscheidend ist lediglich, dass der in die Verdampfungskammer 100 gerichtete Durchmesser bzw. die der Verdampfungskammer 100 zugewandte Fläche größer als die Querschnittsfläche des Steigrohrs ist, um den Verdampfungsprozess zu verbessern. Wenn davon ausgegangen wird, dass etwa 1 l pro Sekunde durch das Steigrohr nach oben in die Verdampfungskammer fließt, werden bei einer Heizleistung von ca. 10 kW etwa 4 ml pro Sekunde im Verdampfer verdampft. Der Rest läuft um etwa 2,5 °C abgekühlt über den Aufweiter 108 hinaus und landet in einem Auffang-Sammelbecken 110 in der Verdampfungskammer. Das Auffang-Sammelbecken 110 hat einen Ablauf 112, in dem die Menge von 1 1 pro Sekunde weniger die verdampften 4 ml pro Sekunde wieder abgeführt wird, und zwar vorzugsweise zurück in das Grundwasserreservoir 104. Hierzu ist vorzugsweise eine Pumpe 114 bzw. ein Ventil zur Überlaufregelung vorgesehen. Es sei darauf hingewiesen, dass hier nichts aktiv gepumpt werden muss, da aufgrund der Schwerkraft dann, wenn die Pumpe bzw. das Ventil 114 geöffnet ist, Wasser aus dem Verdampfer-Auffangbecken 110 über ein Rücklaufrohr 113 nach unten in das Grundwasserreservoir fließt. Die Pumpe bzw. das Ventil 114 stellen somit sicher, das das Wasserniveau im Auffangbecken nicht zu hoch steigt oder dass in das Ablaufrohr 112 kein Wasserdampf eindringt bzw. dass die Verdampfungskammer auch von der Situation am "unteren" Ende des Rücklaufrohrs 113 sicher entkoppelt ist.

Das Steigrohr ist in einem Steigrohrbecken 116 angeordnet, das von einer vorzugsweise vorgesehenen Pumpe 118 mit Wasser gefüllt wird. Die Pegel in 116 und 108 sind nach dem Prinzip der kommunizierenden Röhren miteinander verbunden, wobei die Schwerkraft und die unterschiedlichen Drücke in 116 und 108 für einen Transport des Wassers von 116 nach 108 sorgen. Der Wasserpegel im Steigrohrbecken 116 ist vorzugsweise so angeordnet, dass auch bei unterschiedlichen Luftdrücken der Pegel nie unter den Einlass des Steigrohrs 102 fällt, damit ein Eindringen von Luft vermieden wird.

Vorzugsweise umfasst der Verdampfer 10 einen Gasabscheider, der ausgebildet ist, um wenigstens einen Teil, z. B. wenigstens 50 % eines Gases, das in dem zu verdampfenden Wasser gelöst ist, aus dem zu verdampfenden Wasser zu entfernen, so dass der entfernte Teil des Gases nicht über den Verdampfungsraum von dem Verdichter angesaugt wird. Vorzugsweise ist der Gasabscheider angeordnet, um den entfernten Teil des Gases einem nicht verdampften Wasser zuzuführen, damit das Gas von dem nicht verdampften Wasser abtransportiert wird. Gelöste Gase können Sauerstoff, Kohlendioxid, Stickstoff etc. umfassen. Diese Gase verdampfen zumeist bei einem höheren Druck als Wasser so dass der Gasabscheider unterhalb des Aufweiters 108 angeordnet sein kann, so dass im Gasabscheider verdampfter Sauerstoff etc. aus dem gerade noch nicht verdampfenden Wasser austritt und vorzugsweise in die Rückleitung 113 eingespeist wird. Die Einspeisung erfolgt vorzugsweise an der Stelle des Rückleitung 113, an der der Druck so niedrig ist, dass das Gas von dem zurücklaufenden Wasser wieder ins Grundwasser mitgenommen wird. Alternativ kann das abgeschiedene Gas jedoch auch gesammelt und in bestimmten Intervallen entsorgt werden oder laufend entlüftet, also an die Atmosphäre abgegeben werden.

Typischweise wird das Grundwasser, Meerwasser, Flusswasser, Seewasser, die Sole oder eine sonstige in der Natur vorkommende wässrige Lösung eine Temperatur zwischen 8°C und 12°C haben. Durch die Absenkung der Temperatur von 1 l Wasser um 1°C kann eine Leistung von 4,2 kW erzeugt werden. Wird das Wasser um 2,5°C abgekühlt, so wird eine Leistung von 10,5 kW erzeugt. Vorzugsweise wird das Steigrohr von einem Wasserstrom mit einer Stromstärke in Abhängigkeit von der Heizleistung durchströmt, im Beispiel ein Liter pro Sekunde.

Wenn die Wärmepumpe auf relativ hoher Last arbeitet, wird der Verdampfer etwa 6 ml pro Sekunde verdampfen, was einem Dampfvolumen von ca. 1,2 Kubikmeter pro Sekunde entspricht. Je nach geforderter Heizungswassertemperatur wird die Strömungsmaschine im Hinblick auf ihre Verdichtungsleistung gesteuert. Wird eine Heizungs-Vorlauftemperatur von 45°C gewünscht, was selbst für extrem kalte Tage bei weitem ausreicht, so muss die Strömungsmaschine den bei vielleicht 10 hPa erzeugten Dampf auf einen Druck von 100 hPa erhöhen. Reicht dagegen eine Vorlauftemperatur von z. B. 25° für die Fußbodenheizung, so muss nur um einen Faktor 3 durch die Strömungsmaschine verdichtet werden.

Die erzeugte Leistung wird daher durch die Verdichterleistung bestimmt, also zum einen durch den Verdichtungsfaktor, also wie stark der Verdichter verdichtet, und zum anderen durch von dem Verdichter erzeugten Volumenstrom. Erhöht sich der Volumenstrom, so muss der Verdampfer mehr verdampfen, wobei die Pumpe 118 mehr Grundwasser in das Steigrohrbecken 116 befördert, so dass der Verdampfungskammer mehr Grundwasser zugeführt wird. Wird die Strömungsmaschine dagegen einen geringeren Verdichtungsfaktor liefern, so fließt auch weniger Grundwasser von unten nach oben.

An dieser Stelle sei jedoch darauf hingewiesen, dass es bevorzugt wird, den Durchfluss von Grundwasser durch die Pumpe 118 zu steuern. Nach dem Prinzip der kommunizierenden Röhren legt der Füllstand im Behälter 116 bzw. die Fördermenge der Pumpe 118 den Durchfluss durch das Steigrohr fest. Damit kann eine Effizienzsteigerung der Anlage erreicht werden, da die Steuerung des Durchflusses von der Saugleistung der Strömungsmaschine entkoppelt wird.

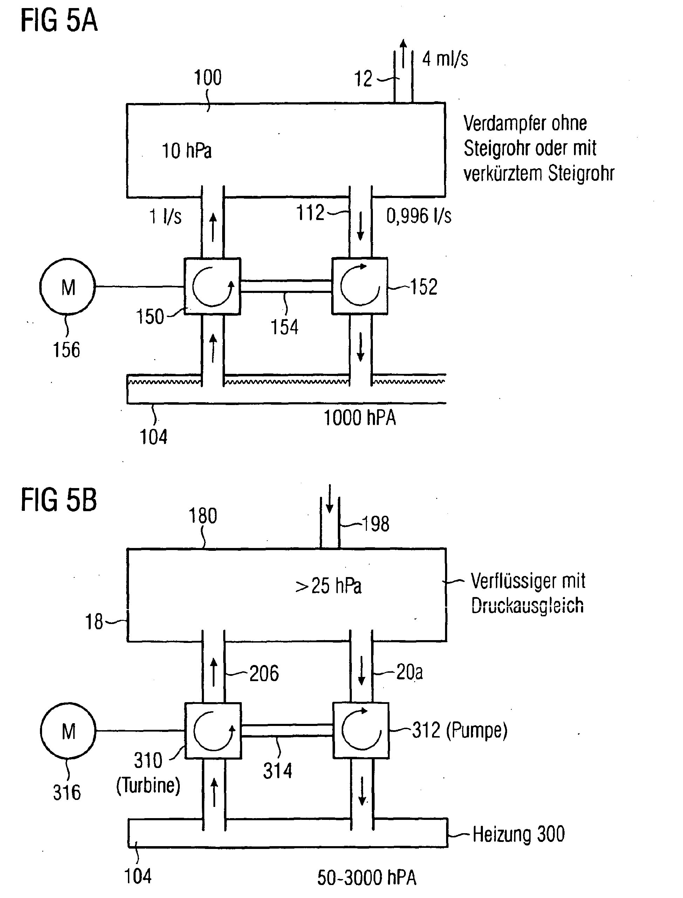

Es wird keine Pumpe benötigt, um das Grundwasser von unten in die Verdampfungskammer 100 zu pumpen. Statt dessen geschieht dies von "selbst". Dieses automatische Aufsteigen zur evakuierten Verdampfungskammer hilft auch dabei, dass der Unterdruck von 20 hPa ohne Weiteres erreichbar ist. Hierzu werden keine Evakuierungspumpen oder etwas ähnliches benötigt. Statt dessen wird lediglich ein Steigrohr mit einer Höhe größer 9 m benötigt. Dann wird eine rein passive Unterdruckerzeugung erreicht. Der nötige Unterdruck kann jedoch auch mit einem wesentlich kürzeren Steigrohr erzeugt werden, wenn z. B. die Implementierung von Fig. 5a eingesetzt wird. In Fig. 5a ist ein wesentlich verkürztes "Steigrohr" gezeigt. Die Umsetzung vom hohen Druck auf den Unterdruck wird über eine Turbine 150 bewirkt, wobei die Turbine hierbei Energie aus dem Arbeitsmedium entzieht. Gleichzeitig wird der Unterdruck auf der Rücklauf-Seite wieder in den hohen Druck gebracht, wobei die dafür nötige Energie durch eine Pumpe 152 geliefert wird. Die Pumpe 152 und die Turbine 150 sind über eine Kraftkopplung 154 miteinander gekoppelt, so dass die Turbine die Pumpe antreibt, und zwar mit der Energie, die die Turbine dem Medium entzogen hat. Ein Motor 156 wird lediglich noch benötigt, um die Verluste, die das System selbstverständlich hat, auszugleichen, und um die Umwälzung zu erreichen, um also ein System aus seiner Ruhelage in den in Fig. 5a gezeigten dynamischen Modus zu bringen.

Bei dem bevorzugten Ausführungsbeispiel ist die Strömungsmaschine als Radialverdichter mit drehbarem Rad ausgeführt, wobei das Rad ein langsamläufiges Radialrad, ein mittelläufiges Radialrad, ein Halbaxialrad oder ein Axialrad bzw. ein Propeller sein kann, wie es in der Technik bekannt sind. Radialverdichter sind in "Strömungsmaschinen", C. Pfleiderer, H. Petermann, Springer-Verlag, 2005, Seiten 82 und 83 beschrieben. Solche Radialverdichter umfassen somit als drehbares Rad den sog. Mittelläufer, dessen Form von den einzelnen Anforderungen abhängt. Generell können beliebige Strömungsmaschinen eingesetzt werden, wie sie als Turboverdichter, Ventilatoren, Gebläse oder Turbokompressoren bekannt sind.

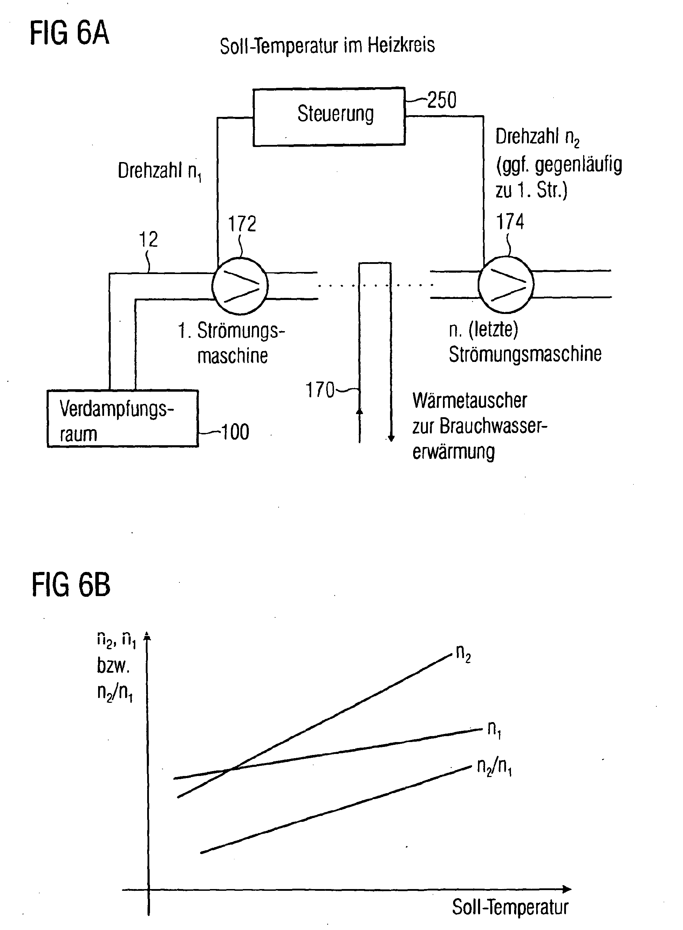

Bei dem bevorzugten Ausführungsbeispiel der vorliegenden Erfindung ist der Radial-Verdichter 16 als mehrere unabhängige Strömungsmaschinen ausgeführt, die zumindest im Hinblick auf ihre Drehzahl unabhängig voneinander gesteuert werden können, so dass zwei Strömungsmaschinen unterschiedliche Drehzahlen haben können. Eine solche Implementierung ist in Fig. 6a dargestellt, bei der der Verdichter als Kaskade von n Strömungsmaschinen ausgebildet ist. An beliebigen Stellen nach der ersten Strömungsmaschine wird vorzugsweise einer oder auch mehrere Wärmetauscher beispielsweise zur Brauchwassererwärmung, die mit 170 bezeichnet sind, vorgesehen. Diese Wärmetauscher sind ausgebildet, um das von einer vorherigen Strömungsmaschine 172 erhitzte (und komprimierte) Gas abzukühlen. Hierbei wird die Überhitzungsenthalpie sinnvoll genutzt, um den Wirkungsgrad des gesamten Verdichtungsprozesses zu erhöhen. Das gekühlte Gas wird dann mit einem oder mehreren nachgeschalteten Verdichtern weiter verdichtet oder direkt dem Verflüssiger zugeführt. Es wird Wärme aus dem komprimierten Wasserdampf entnommen, um damit z. B. Brauchwasser auf höhere Temperaturen als z. B. 40°C zu erhitzen. Dies verringert jedoch den Gesamtwirkungsgrad der Wärmepumpe nicht, sondern erhöht ihn sogar noch, da zwei aufeinanderfolgend geschaltete Strömungsmaschinen mit dazwischengeschalteter Gaskühlung mit einer höheren Lebensdauer aufgrund der reduzierten thermischen Beanspruchung und mit weniger Energie den geforderten Gasdruck im Verflüssiger erreichen, als wenn eine einzige Strömungsmaschine ohne Gaskühlung vorhanden sein würde.

Die kaskadierten unabhängig voneinander betriebenen Strömungsmaschinen werden vorzugsweise von einer Steuerung 250 angesteuert, die eingangsseitig eine Soll-Temperatur im Heizkreis sowie gegebenenfalls auch eine Ist-Temperatur im Heizkreis erhält. Abhängig von der gewünschten Soll-Temperatur werden die Drehzahl einer in der Kaskade früher angeordneten Strömungsmaschine, die beispielhaft mit n₁ bezeichnet ist, und die Drehzahl n₂ einer später in der Kaskade angeordneten Strömungsmaschine so geändert, wie es anhand von Fig. 6b dargestellt ist. Wird eine höhere Soll-Temperatur in die Steuerung 250 eingegeben, so werden beide Drehzahlen erhöht. Allerdings wird die Drehzahl der früher angeordneten Strömungsmaschine, die mit n₁ in Fig. 6b bezeichnet ist, mit einem kleineren Gradienten angehoben als die Drehzahl n₂ einer später in der Kaskade angeordneten Strömungsmaschine. Dies führt dazu, dass dann, wenn das Verhältnis n₂/n₁ der beiden Drehzahlen aufgetragen wird, sich im Diagramm von Fig. 6b eine Gerade mit einer positiven Steigung ergibt.

Der Schnittpunkt zwischen den einzeln aufgetragenen Drehzahlen n₁ und n₂ kann an beliebiger Stelle, also an beliebiger Soll-Temperatur erfolgen und kann gegebenenfalls auch nicht erfolgen. Generell wird jedoch bevorzugt, eine in der Kaskade näher am Verflüssiger angeordnete Strömungsmaschine im Hinblick auf ihre Drehzahl stärker anzuheben als eine früher in der Kaskade angeordnete Strömungsmaschine, wenn eine höhere Soll-Temperatur gewünscht wird.

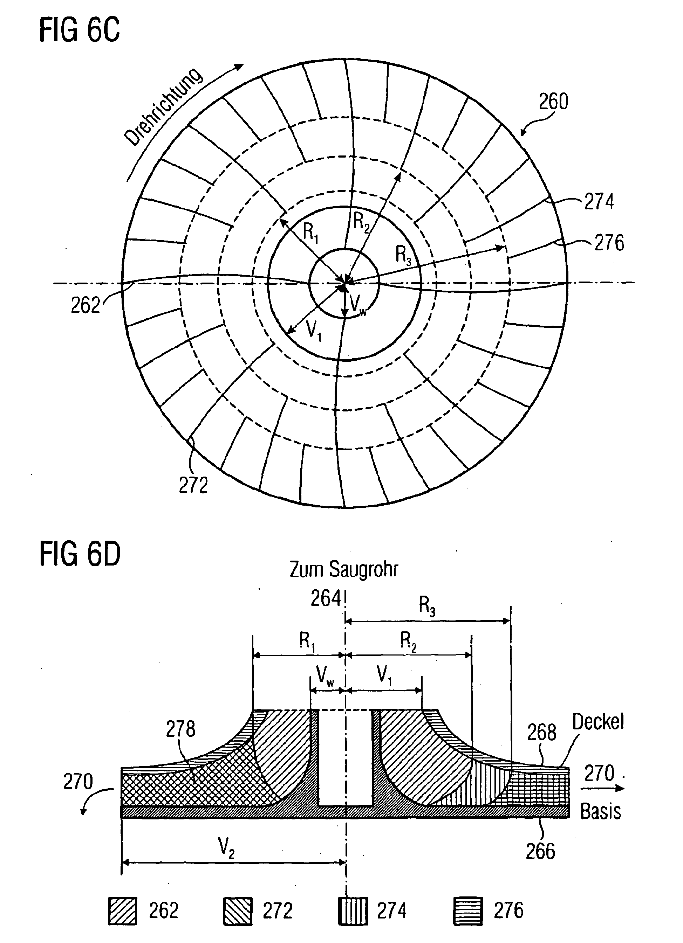

Der Grund hierfür besteht darin, dass die später in der Kaskade angeordnete Strömungsmaschine bereits verdichtetes Gas, das von einer früher in der Kaskade angeordneten Strömungsmaschine verdichtet worden ist, weiterverarbeiten muss. Ferner stellt dies sicher, dass der Schaufelwinkel von Schaufeln eines Radialrads, wie es auch Bezug nehmend auf Fig. 6c und 6d erläutert wird, immer möglichst gut bezüglich der Geschwindigkeit des zu verdichtenden Gases steht. So besteht die Einstellung des Schaufelwinkels lediglich in der Optimierung einer möglichst wirbelarmen Kompression des einlaufenden Gases. Die weiteren Parameter der Winkeleinstellung wie Gasdurchsatz und Verdichtungsverhältnis, die sonst einen technischen Kompromiss bei der Wahl des Schaufelwinkels und damit nur bei einer Soll-Temperatur einen optimalen Wirkungsgrad ermöglicht hätten, werden erfindungsgemäß durch die unabhängige Drehzahlregelung auf ihren optimalen Arbeitspunkt gebracht und haben daher keinen Einfluß mehr auf die Wahl des Schaufelwinkels. so ergibt sich trotz eines fest eingestellten Schaufelwinkels immer ein optimaler Wirkungsgrad.

Im Hinblick darauf wird es ferner bevorzugt, dass eine in der Kaskade mehr in Richtung des Verflüssigers angeordnete Strömungsmaschine eine Drehrichtung des Radialrads aufweist, die zu der Drehrichtung eines früher in der Kaskade angeordneten Radialrads entgegengesetzt ist. Damit kann ein nahezu optimaler Eintrittswinkel der Schaufeln beider Axialräder in den Gasstrom erreicht werden, derart, dass ein günstiger Wirkungsgrad der Strömungsmaschinen-Kaskade nicht nur in einem kleinen Soll-Temperaturbereich auftritt, sondern in einem wesentlich größeren Soll-Temperaturbereich zwischen 20 und 50 Grad, was für typische Heizungsanwendungen ein optimaler Bereich ist. Die erfindungsgemäße Drehzahlsteuerung sowie gegebenenfalls die Verwendung von gegenläufigen Axialrädern liefert somit eine optimale Abstimmung zwischen dem variablen Gasstrom bei sich verändernder Soll-Temperatur einerseits und den festen Schaufelwinkeln der Axialräder andererseits.

Bei bevorzugten Ausführungsbeispielen der vorliegenden Erfindung wird zumindest eines oder vorzugsweise sämtliche Axialräder aller Strömungsmaschinen aus Kunststoff mit einer Zugfestigkeit oberhalb 80 MPa hergestellt. Ein bevorzugter Kunststoff hierfür ist Polyamid 6.6 mit eingelegten Karbonfasern. Dieser Kunststoff hat den Vorteil der Zugfestigkeit, so dass Axialräder der Störungsmaschinen aus diesem Kunststoff hergestellt werden können und dennoch mit hohen Drehzahlen betrieben werden können.

Vorzugsweise werden Axialräder erfindungsgemäß eingesetzt, wie sie beispielsweise in Fig. 6c bei Bezugszeichen 260 gezeigt sind. Fig. 6c zeigt eine schematische Draufsicht eines solchen Radialrads, wobei Fig. 6d eine schematische Querschnittsdarstellung eines solchen Radialrads zeigt. Ein Radialrad umfasst, wie es in der Technik bekannt ist, mehrere sich von innen nach außen erstreckende Schaufeln 262. Die Schaufeln erstrecken sich von einem Abstand einer Mittelachse 264, der mit r_{w} bezeichnet ist, ganz nach außen bezüglich der Achse 264 des Radialrads. Insbesondere umfasst das Radialrad eine Basis 266 sowie einen Deckel 268, der zum Saugrohr oder zu einem Verdichter einer früheren Stufe gerichtet ist. Das Radialrad umfasst eine Ansaugöffnung, die mit r₁ bezeichnet ist, um Gas anzusaugen, wobei dieses Gas vom Radialrad dann seitlich ausgegeben wird, wie es bei 270 in Fig. 6d angegeben ist.

Wenn Fig. 6c betrachtet wird, so befindet sich das Gas in Drehrichtung vor der Schaufel 262 auf einer relativ höheren Geschwindigkeit, während es hinter der Schaufel 262 auf einer reduzierteren Geschwindigkeit ist. Allerdings wird es für eine hohe Effizienz und einen hohen Wirkungsgrad bevorzugt, dass das Gas überall mit einer möglichst gleichförmigen Geschwindigkeit aus dem Radialrad seitlich, also bei 270 in Fig. 6d ausgestoßen wird. Zu diesem Zweck besteht der Wunsch, die Schaufeln 262 möglichst dicht anzubringen.

Eine beliebig dichte Anbringung von sich von innen, also vom Radius r_{w} nach außen erstreckenden Schaufeln ist jedoch aus technischen Gründen nicht möglich, da dann die Ansaugöffnung mit dem Radius r₁ mehr und mehr blockiert wird.

Erfindungsgemäß wird es daher bevorzugt, Schaufeln 272 bzw. 274 bzw. 276 vorzusehen, die sich weniger lang als die Schaufel 262 erstrecken. Insbesondere erstrecken sich die Schaufeln 272 nicht von r_{w} bis ganz nach außen, sondern von R₁ nach außen bezüglich des Radialrads, wobei R₁ größer als r_{w} ist. Analog hierzu erstrecken sich, wie es in Fig. 6c beispielhaft gezeigt ist, die Schaufeln 274 lediglich von R₂ nach außen, während sich die Schaufeln 276 lediglich von R₃ nach außen erstrecken, wobei R₂ größer als R₁ und wobei R₃ größer als R₂ ist.

Diese Verhältnisse sind in Fig. 6d schematisch dargestellt, wobei eine doppelte Schraffur, beispielsweise im Bereich 278 in Fig. 6d angibt, dass sich in diesem Bereich zwei Schaufeln befinden, die sich überdecken und daher durch den doppelt schraffierten Bereich gekennzeichnet sind. So bezeichnet die von links unten nach rechts oben im Bereich 278 gezeigte Schraffur eine Schaufel 262, die sich von r_{w} bis nach ganz außen erstreckt, während die von links oben nach rechts unten im Bereich 278 erstreckende Schraffur eine Schaufel 272 andeutet, die sich lediglich von R₁ bis nach außen bezüglich des Radialrads erstreckt.

Vorzugsweise ist somit zwischen zwei sich tiefer nach innen erstreckenden Schaufeln wenigstens eine Schaufel angeordnet, die sich nicht so weit nach innen erstreckt. Dies führt dazu, dass der Ansaugbereich nicht verstopft wird bzw. Bereiche mit kleinerem Radius nicht zu stark mit Schaufeln belegt werden, während Bereiche mit größerem Radius dichter mit Schaufeln belegt werden, so dass am Ausgang des Radialrads, also dort, wo das komprimierte Gas das Radialrad verlässt, eine möglichst homogene Geschwindigkeitsverteilung des austretenden Gases existiert. Die Geschwindigkeitsverteilung des austretenden Gases ist bei dem erfindungsgemäßen bevorzugten Radialrad in Fig. 6c am äußeren Umfang deswegen besonders homogen, da der Abstand von Schaufeln, die das Gas beschleunigen, und aufgrund der "gestapelten" Anordnung der Schaufeln wesentlich kleiner als in einem Fall ist, bei dem z.B. nur die Schaufeln 262 vorhanden sind, welche sich von ganz innen bis ganz außen erstrecken und somit zwangsläufig am äußeren Ende des Radialrads einen sehr großen Abstand aufweisen, der wesentlich größer ist als beim erfindungsgemäßen Radialrad, wie es in Fig. 6c dargestellt ist.

An dieser Stelle sei darauf hingewiesen, dass die relativ aufwendige und komplizierte Form des Radialrads in Fig. 6c besonders günstig mit Kunststoff-Spritzguss hergestellt werden kann, wobei insbesondere einfach erreicht werden kann, dass alle Schaufeln, auch die Schaufeln, die sich nicht von ganz innen bis ganz außen erstrecken, also die Schaufeln 272, 274, 276 fest verankert sind, da sie sowohl mit dem Deckel 268 also auf der Basis 266 von Fig. 6d verbunden sind. Die Verwendung von Kunststoff insbesondere mit der Kunststoff-Spritzgusstechnik ermöglicht es, beliebige Formen genau und kostengünstig herzustellen, was mit Axialrädern aus Metall nicht ohne weiteres bzw. nur sehr aufwendig oder möglicherweise sogar gar nicht möglich ist.

An dieser Stelle sei darauf hingewiesen, dass sehr hohe Drehzahlen des Radialrads bevorzugt werden, so dass die auf die Schaufeln wirkenden Beschleunigungen ganz erhebliche Werte annehmen. Aus diesem Grund wird es bevorzugt, dass insbesondere die kürzeren Schaufeln 272, 274, 276 nicht nur mit der Basis, sondern auch mit dem Deckel fest verbunden sind, derart, dass das Radialrad die auftretenden Beschleunigungen ohne weiteres aushalten kann.

In diesem Zusammenhang sei auch darauf hingewiesen, dass die Verwendung von Kunststoff auch aufgrund der überragenden Schlagfestigkeit von Kunststoff günstig ist. So ist nicht immer auszuschließen dass Eiskristalle oder Wassertröpfchen auf das Radialrad zumindest der ersten Verdichterstufe aufschlagen. Aufgrund der hohen Beschleunigungen entstehen hier sehr hohe Aufprallkräfte, die von Kunststoffen mit ausreichender Schlagfestigkeit ohne weiteres ausgehalten werden. Des Weiteren findet die Verflüssigung im Verflüssiger bevorzugt aufgrund des Kavitations-Prinzips statt. Hier fallen Dampfbläschen aufgrund dieses Prinzips in einem Wasservolumen in sich zusammen. Dort entstehen ebenfalls mikroskopisch betrachtet ganz erhebliche Geschwindigkeiten und Kräfte, die auf lange Sicht betrachtet zu Materialermüdungen führen können, welche jedoch dann, wenn ein Kunststoff mit einer ausreichender Schlagfestigkeit eingesetzt wird, leicht beherrschbar sind.

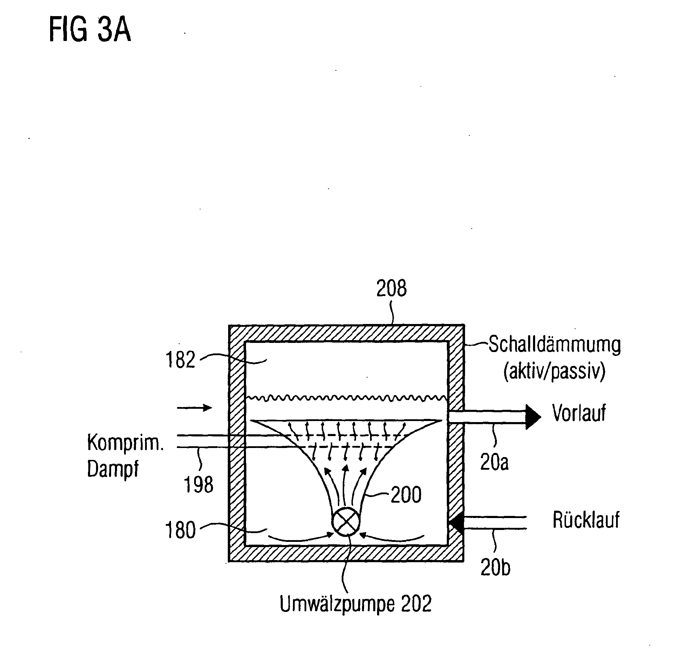

Das von dem letzten Verdichter 174 ausgegebene verdichtete Gas, also der verdichtete Wasserdampf wird dann dem Verflüssiger 18 zugeführt, der ausgestaltet sein kann, wie es in Fig. 2 gezeigt ist, der jedoch vorzugsweise so ausgestaltet ist, wie es in Fig. 3a gezeigt ist. Der Verflüssiger 18 enthält ein Wasservolumen 180 und vorzugsweise ein beliebig kleines Dampfvolumen 182. Der Verflüssiger 18 ist ausgebildet, um den komprimierten Dampf in das Wasser des Wasservolumens 180 einzuspeisen, so dass sich dort, wo der Dampf in die Flüssigkeit eintritt, sofort eine Kondensierung ergibt, wie es bei 184 schematisch angezeichnet ist. Hierzu wird es bevorzugt, dass die Gaszuführung einen Aufweitungsbereich 186 hat, derart, dass das Gas möglichst großflächig in dem Verflüssiger-Wasservolumen 180 verteilt wird. Typischerweise stellt sich aufgrund der Temperaturschichten in einem Wassertank oben die höchste Temperatur und unten die kühlste Temperatur ein. Daher wird über einen Schwimmer 188 der Heizungsvorlauf möglichst nahe an der Oberfläche des Wasservolumens 180 angeordnet, um immer das wärmste Wasser aus dem Verflüssiger-Wasservolumen 180 zu entnehmen. Der Heizungs-Rücklauf wird unten dem Verflüssiger zugeführt, so dass der zu verflüssigende Dampf immer mit möglichst kühlem Wasser in Verbindung kommt, das sich aufgrund der Umwälzung unter Verwendung einer Heizungs-Umwälzpumpe 312 wieder von unten in Richtung der Dampf-Wasser-Grenze des Aufweiters 186 bewegt.

Die Ausführungsform in Fig. 2, bei der nur eine einfache Umwälzpumpe 312 existiert, ist dann ausreichend, wenn der Verflüssiger so in einem Gebäude angeordnet ist, dass die zu heizenden Bereiche unterhalb des Verflüssigers sind, so dass aufgrund der Gravitation in allen Heizungsrohren ein größerer Druck als im Verflüssiger ist.

Fig. 5b zeigt dagegen eine Implementierung eines Anschlusses einer Heizungsleitung an den Verflüssiger mit einer Turbinen/Pumpenkombination, wenn der Verflüssiger auf geringerer Höhe als die Heizungsleitung angeordnet werden soll, oder wenn eine herkömmliche Heizung, die einen höheren Druck benötigt, angeschlossen werden soll. Soll der Verflüssiger also niedriger angeordnet werden, also unterhalb einer zu beheizenden Fläche bzw. der Heizungsleitung 300, so wird die Pumpe 312 als eine getriebene Pumpe ausgeführt, wie sie bei 312 in Fig. 5b gezeigt ist. Ferner wird eine Turbine 310 im Heizungsrücklauf 20b zum Antreiben der Pumpe 312 vorgesehen, die über eine Kraftkopplung 314 mit der Pumpe 312 verschaltet ist. Der hohe Druck herrscht dann in der Heizung und der niedrige Druck herrscht im Verflüssiger.

Nachdem aufgrund des ständig in den Verflüssiger eingeführten Dampfes der Wasserstand im Verflüssiger immer mehr ansteigen würde, ist der Ablauf 22 vorgesehen, über dem, damit der Wasserstand im Verflüssiger sich im Wesentlichen nicht verändert, ebenfalls z. B. etwa 4 ml pro Sekunde abfließen müssen. Hierzu ist eine Ablauf-Pumpe bzw. ein Ablaufventil 192 zur Druckregelung vorgesehen, derart, dass ohne Druckverlust die erforderliche Menge von z. B. 4 ml pro Sekunde, also die Menge, die an Wasserdampf dem Verflüssiger bei laufendem Verdichter zugeführt wird, wieder abgeführt wird. Je nach Implementierung kann der Ablauf in das Steigrohr eingeführt werden, wie es bei 194 gezeigt ist. Nachdem entlang des Steigrohrs 102 sämtliche Drücke zwischen einem bar und dem im Verdampfungsraum vorhandenen Druck vorliegen, wird es bevorzugt, den Ablauf 22 an der Stelle 194 in das Steigrohr einzuspeisen, an dem annähernd der gleiche Druck existiert wie er nach der Pumpe 192 bzw. dem Ventil 192 vorliegt. Dann muss keine Arbeit verrichtet werden, um das Ablaufwasser dem Steigrohr wieder zuzuführen.

Bei dem in Fig. 2 gezeigten Ausführungsbeispiel wird völlig ohne Wärmetauscher gearbeitet. Das Grundwasser wird also verdampft, der Dampf wird dann im Verflüssiger verflüssigt, und der verflüssigte Dampf wird schließlich durch die Heizung gepumpt und dem Steigrohr wieder zugeführt. Nachdem jedoch nicht die gesamte durch das Steigrohr fließende Wassermenge verdampft wird, sondern immer nur ein (sehr kleiner) Anteil, wird somit Wasser, das durch die Fußbodenheizung geflossen ist, dem Grundwasser zugeführt. Falls etwas derartiges aufgrund kommunaler Vorschriften verboten ist, obgleich die vorliegende Erfindung keinerlei Verschmutzung mit sich bringt, kann der Ablauf auch ausgebildet sein, um die Menge von 4 ml pro Sekunde, die etwa 345 l pro Tag entspricht, dem Kanal zuzuführen. Damit würde sichergestellt werden, dass kein Medium, das sich in einem Heizungssystem eines Gebäudes befunden hat, direkt wieder ins Grundwasser eingespeist wird. '

Allerdings kann der Rücklauf 112 aus dem Verdampfer ohne Probleme in das Grundwasser eingespeist werden, da das dort zurücklaufende Wasser lediglich mit dem Steigrohr und der Rückleitung in Kontakt war, jedoch die "Verdampfungsgrenze" zwischen dem Verdampfungs-Aufweiter 108 und dem Ausgang zur Strömungsmaschine nicht überschritten hat.

Es sei darauf hingewiesen, dass der Verdampfungsraum bei dem in Fig. 2 gezeigten Ausführungsbeispiel sowie der Verflüssiger bzw. der Dampfraum 182 des Verflüssigers abgedichtet sein müssen. Sobald im Verdampfungsraum der Druck über die Marke ansteigt, die nötig ist, damit das durch das Steigrohr geförderte Wasser verdampft, bleibt der Wärmepumpenprozess "stehen".

Nachfolgend wird auf Fig. 3a Bezug genommen, die ein bevorzugtes Ausführungsbeispiel für den Verflüssiger 18 darstellt. Die Zufuhrleitung 198 für komprimierten Dampf wird derart in den Verflüssiger platziert, dass der Dampf knapp unterhalb der Oberfläche des Verflüssiger-Wasservolumens 180 in dieses Wasservolumen austreten kann. Hierzu umfasst das Ende der Dampfzuleitung um den Umfang des Rohrs herum angeordnete Düsen, durch die der Dampf in das Wasser austreten kann. Damit eine möglichst gute Durchmischung auftritt, damit also der Dampf mit möglichst kaltem Wasser in Berührung kommt, um möglichst schnell und effizient zu verflüssigen, ist ein Aufweiter 200 vorgesehen. Diese Aufweitung ist in dem Verflüssiger-Wasservolumen 180 angeordnet. Sie hat an ihrer schmalen Stelle eine Umwälzpumpe 202, die ausgebildet ist, um kaltes Wasser am Boden des Verflüssigers anzusaugen und durch den Aufweiter in eine nach oben gerichtete sich verbreiternde Strömung zu versetzen. Dadurch sollen möglichst große Mengen des in das Verflüssiger-Wasser 180 eintretenden Dampfes mit möglichst kaltem Wasser, das von der Umwälzpumpe 202 geliefert wird, in Verbindung gebracht werden.

Ferner wird es bevorzugt, um den Verflüssiger herum eine Schalldämmung 208 vorzusehen, die aktiv oder passiv ausgebildet sein kann. Eine passive Schalldämmung wird ähnlich einer Wärmedämmung die Frequenzen des durch das Verflüssigen erzeugten Schalls so gut als möglich dämmen. Genauso wird es auch bevorzugt, die anderen Komponenten des Systems schallzudämmen.

Die Schalldämmung kann alternativ auch aktiv ausgebildet sein, wobei sie in diesem Fall z. B. ein Mikrophon zur Schallmessung hätte und ansprechend darauf eine Schall-Gegenwirkung auslösen würde, wie beispielsweise eine In-Vibration-Versetzen einer äußeren Verflüssiger-Wand etc. mit z. B. piezoelektrischen Mitteln.

Das in Fig. 3a gezeigte Ausführungsbeispiel ist dahin gehend etwas problematisch, dass dann, wenn die Wärmepumpe außer Betrieb genommen wird, die im Verflüssiger befindliche Flüssigkeit 180 in das Rohr 198, in dem ansonsten ein komprimierter Dampf vorhanden ist, eindringt. Bei einer Implementierung kann hierfür ein Rücklaufventil in der Leitung 198, z.B. in der Nähe des Ausgangs der Leitung aus dem Verflüssiger angeordnet sein. Alternativ kann die Leitung 198 nach oben geführt werden, und zwar soweit, dass keine Flüssigkeit zurück in den Verdichter läuft, wenn der Verdichter ausgeschaltet wird. Wenn der Verdichter dann wieder in Betrieb genommen wird, so wird zunächst durch den komprimierten Dampf das Wasser aus der Dampfleitung 198 in den Verflüssiger gedrückt.

Erst dann wird ein Dampf im Verflüssiger zur Kondensierung gebracht, wenn ein genügender Anteil des Wassers aus der Leitung 198 entfernt worden ist. Ein solchermaßen geartetes Ausführungsbeispiel hat somit eine gewisse Verzögerungszeit, die benötigt wird, bis das Wasservolumen 180 wieder vom komprimierten Dampf aufgewärmt wird. Ferner ist die Arbeit, die benötigt wird, um das in die Leitung 198 eingedrungene Wasser aus der Leitung 198 wieder zu entfernen, nicht mehr wiedergewinnbar und somit im Hinblick auf die Heizung "verloren", derart, dass kleinere Wirkungsgrad-Einbußen in Kauf genommen werden müssen.

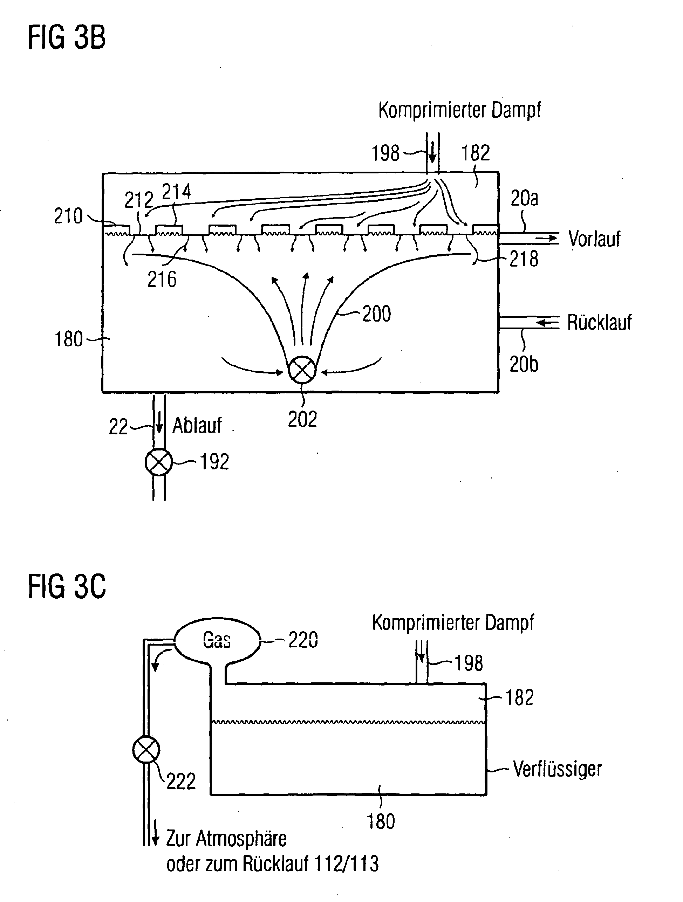

Eine alternative Ausführungsform, die diese Problematik überwindet, ist in Fig. 3b gezeigt. Im Gegensatz zu Fig. 3a wird der komprimierte Dampf nunmehr nicht innerhalb eines Rohrs unterhalb des Wasserspiegels im Verflüssiger zugeführt. Stattdessen wird der Dampf gewissermaßen in die Flüssigkeit im Verflüssiger von der Oberfläche aus "hineingepumpt". Hierzu umfasst der Verflüssiger eine Düsenplatte 210, die bezüglich der Ebene der Düsenplatte 210 vorstehende Düsen 212 aufweist. Die Düsen 212 erstrecken sich unter den Wasserspiegel des Wasservolumens 180 im Verflüssiger. Die zurückgenommenen Abschnitte zwischen zwei Düsen, die in Fig. 3b bei 214 gezeigt sind, erstrecken sich dagegen oberhalb des Wasserspiegels des Wasservolumens 180 im Verflüssiger, so dass immer zwischen zwei Düsen die Wasseroberfläche des Verflüssiger-Wassers ist, die von einer Düse unterbrochen wird. Die Düse 212 hat Düsenöffnungen, durch die der komprimierte Dampf, der sich von der Leitung 198 innerhalb des Dampfvolumens 182 ausbreitet, in das Verflüssiger-Wasser eindringen kann, wie es schematisch durch Pfeile 216 gezeigt ist.

Wenn bei der Implementierung von Fig. 3b der Verdichter außer Betrieb genommen wird, so führt dies dazu, dass die Flüssigkeit nur ein klein wenig in die Düsen 212 der Düsenplatte 210 eindringt, so dass auch nur ganz wenig Arbeit aufgewendet werden muss, um bei einer Wiederinbetriebnahme der Wärmepumpe das Wasser aus den Düsen wieder herauszudrücken. Auf jeden Fall stellt der Aufweiter 200 sicher, dass aufgrund der Führung durch den Aufweiter die durch die Pumpe 202 nach oben beförderten Flüssigkeit immer möglichst kalt ist und mit dem warmen Dampf in Berührung kommt. Das warme Wasser dringt dann entweder gleich in den Vorlauf 20a ein oder verbreitet sich über den Aufweiter-Rand im Wasservolumen, wie es durch einen Pfeil 218 dargestellt ist, so dass im Verflüssiger außerhalb des Aufweiters eine Temperatur-Schichtung auftritt, die insbesondere aufgrund der Aufweiter-Form möglichst wenig gestört ist.

Die Flussgeschwindigkeit am Rand des Aufweiters, also dort, wo der Pfeil 218 angedeutet ist, ist wesentlich geringer als in der Mitte. Es wird bevorzugt, den Verflüssiger als Temperaturschichtspeicher zu betreiben, derart, dass die Wärmepumpe und insbesondere der Verdichter nicht ununterbrochen laufen muss, sondern nur dann laufen muss, wenn Bedarf existiert, wie es für normale Heizungsanlagen, die z.B. mit einem Ölbrenner arbeiten, ebenfalls der Fall ist.

Fig. 3c zeigt eine weitere bevorzugte Implementierung des Verflüssigers in schematischer Form. Insbesondere umfasst der Verflüssiger einen Gasabscheider 220, der mit dem Gasvolumen 182 im Verflüssiger gekoppelt ist. Im Verflüssiger entstehendes Gas, wie beispielsweise Sauerstoff oder ein anderes Gas, das im Verflüssiger ausgasen kann, sammelt sich in dem Gasabscheider-Behälter 220 an. Dieses Gas kann dann durch Betätigung einer Pumpe 222 vorzugsweise in bestimmten Abständen, da eine dauernde Gasabpumpung aufgrund der geringen entstehenden Gasmenge nicht nötig ist, zur Atmosphäre gepumpt werden. Alternativ kann das Gas auch wieder in den Rücklauf 112 bzw. 113 von Fig. 2 angedockt werden, so dass das Gas wieder zusammen mit dem rücklaufenden Grundwasser zurück in das Grundwasser-Reservoir gebracht wird, wo es dann wieder im Grundwasser gelöst ist, oder dann, wenn es in das Grundwasserreservoir eintritt, dort in die Atmosphäre übergeht.

Nachdem das erfindungsgemäße System mit Wasser arbeitet, entstehen selbst bei starker Ausgasung keine Gase, die nicht bereits vorher im Grundwasser gelöst waren, so dass das abgeschiedene Gas keinerlei Umweltproblematik in sich birgt. Wieder wird betont, dass aufgrund des erfindungsgemäßen Strömungsmaschine-Verdichtens und des Verwendens von Wasser als Arbeitsflüssigkeit an keiner Stelle Kontaminationen bzw. Verschmutzungen durch ein synthetisches Kältemittel oder durch ein Öl aufgrund eines Ölkreislaufs auftreten. Das erfindungsgemäße System hat an jeder Stelle als Arbeitsmedium Wasser oder Dampf, welches wenigstens so sauber wie das ursprüngliche Grundwasser ist, oder sogar aufgrund der Verdampfung im Verdampfer noch sauberer als das Grundwasser ist, da es sich um destilliertes Wasser handelt, wenn der komprimierte Dampf im Verflüssiger wieder verflüssigt worden ist.

Nachfolgend wird Bezug nehmend auf Fig. 4a eine bevorzugte Ausführungsform des Verdampfers dargestellt, um den Verflüssiger-Ablauf vorteilhafterweise zum Beschleunigen des Verdampfungsvorgangs einzusetzen. Hierzu wird der Ablauf, der ja auf Heizungs-Rücklauf-Temperatur ist, also eine viel höhere Temperatur hat als das aus der Erde geförderte Grundwasser, durch den Aufweiter 108 des Verdampfers hindurchgeführt, so dass die Wand des Ablauf-Rohrs 204 als Keim für eine Blasensiedung wirkt. Damit wird wesentlich effizienter Dampf durch den Verdampfer erzeugt als wenn keine solche Keimwirkung vorgesehen wird. Ferner wird es bevorzugt, wenigstens im Aufweiter die Wand des Ablaufrohrs 204 möglichst strukturiert zu gestalten, wie es bei 206 dargestellt ist, um die Keimbildung für die Blasensiedung noch zu verbessern. Je rauer die Oberfläche des Ablaufrohrs 204 ist, umso mehr Keime werden für die Blasensiedung erzeugt. Es sei darauf hingewiesen, dass der Durchlauf durch das Ablaufrohr 22 nur sehr gering ist, da es sich hier nur um die 4 ml pro Sekunde handelt, die in einem Betriebsmodus dem Verflüssiger zugefügt werden. Dennoch kann bereits mit dieser kleiner Menge und aufgrund der im Vergleich zum Grundwasser relativ hohen Temperatur die wesentlich effizientere Blasensiedung herbeigeführt werden, um bei gleicher Effizienz der Wärmepumpe die Größe des Verdampfers zu reduzieren.

Zur Beschleunigung des Verdampfungsvorgangs kann alternativ oder zusätzlich auch ein Bereich des Verdampfers, auf dem sich zu verdampfendes Wasser befindet, also die Oberfläche des Aufweiters oder ein Teil davon, aus einem rauen Material ausgeführt sein, um Keime für die Blasensiedung zu liefern. Alternativ oder zusätzlich kann auch ein raues Gitter (nahe) unter der Wasseroberfläche des zu verdampfenden Wassers angeordnet werden.

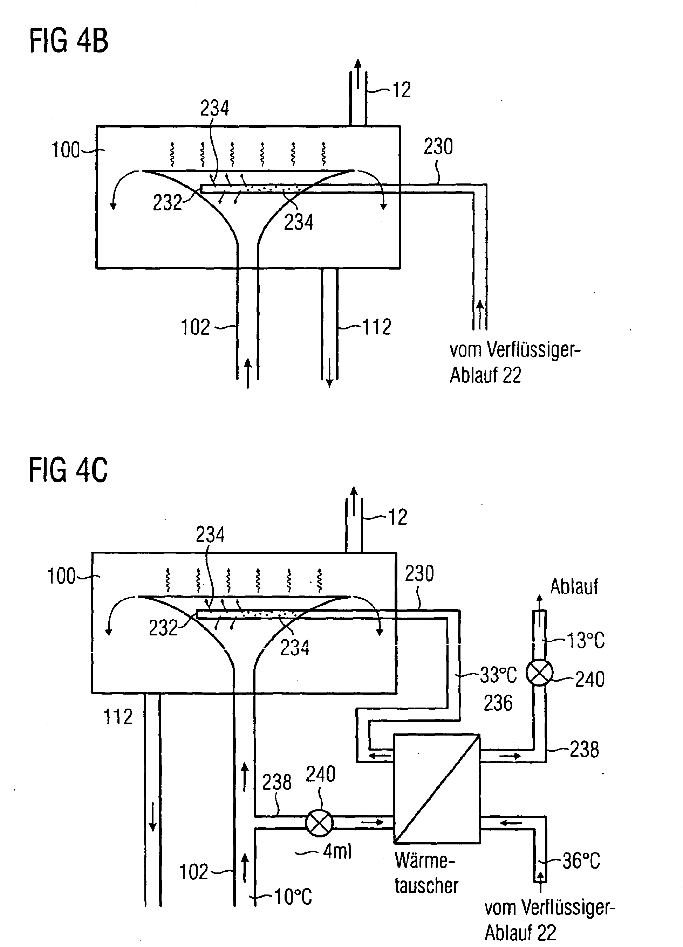

Fig. 4b zeigt eine alternative Implementierung des Verdampfers. Während der Ablauf in Fig. 4a lediglich als "Durchlauf"-Unterstützung der Blasenbildung zum effizienten Verdampfen eingesetzt worden ist und, wie es in Fig. 4a links im Bild gezeigt ist, dann, wenn er den Verdampfer durchlaufen hat, abgeführt wird, wird der Ablauf in Fig. 4b selbst dazu verwendet, die Blasenbildung zu verstärken. Hierzu wird der Verflüssiger-Ablauf 22 von Fig. 2 gegebenenfalls über eine Pumpe 192 oder, wenn es die Verhältnisse zulassen, ohne Pumpe, mit einem Düsenrohr 230 verbunden, das an einem Ende einen Abschluss 232 hat, und das Düsenöffnungen 234 aufweist. Das warme Verflüssiger-Wasser, das aus dem Verflüssiger über den Ablauf 22 mit einer Rate von beispielsweise 4 ml pro Sekunde abgeführt wird, wird nunmehr in den Verdampfer eingespeist. Es wird auf seinem Weg zu einer Düsenöffnung 234 in dem Düsenrohr 230 oder unmittelbar am Austritt an einer Düse aufgrund des für die Temperatur des Ablaufwassers zu geringen Drucks bereits gewissermaßen unter der Wasseroberfläche des Verdampfer-Wassers verdampfen.

Die dort entstehenden Dampfblasen werden unmittelbar als Siede-Keime für das Verdampfer-Wasser, das über den Zulauf 102 gefördert wird, wirken. Damit kann ohne größere zusätzliche Maßnahmen eine effiziente Blasensiedung im Verdampfer getriggert werden, wobei diese Triggerung ähnlich zu Fig. 4a aufgrund der Tatsache existiert, dass die Temperatur in der Nähe des rauen Bereichs 206 in Fig. 4a bzw. in der Nähe einer Düsenöffnung 234 bereits so hoch ist, dass bei dem vorliegenden Druck unmittelbar eine Verdampfung stattfindet. Diese Verdampfung erzwingt die Erzeugung eines Dampfbläschens, das dann, wenn die Verhältnisse vorteilhaft gewählt sind, eine sehr große Wahrscheinlichkeit hat, dass es nicht wieder zusammenfällt, sondern dass es sich zu einer bis zur Oberfläche gehenden Dampfblase entwickelt, die dann, sobald sie in das Dampfvolumen in der Verdampfungskammer eingetreten ist, über das Saugrohr 12 vom Verdichter abgesaugt wird.

Das in Fig. 4b gezeigte Ausführungsbeispiel erfordert es, dass Verflüssiger-Wasser in den Grundwasser-Kreislauf gebracht wird, da das aus dem Düsenrohr 230 austretende Medium letztendlich über den Überlauf des Verdampfers wieder in den Rücklauf 112 eintritt und damit mit dem Grundwasser in Verbindung gebracht wird.

Existieren wasserrechtliche Auflagen oder sonstige Gründe, dass dies nicht zulässig ist, so kann das in Fig. 4c gezeigte Ausführungsbeispiel eingesetzt werden. Hier wird das vom Verflüssiger-Ablauf 22 gelieferte warme Verflüssiger-Wasser beispielsweise mit einer Rate von 4 ml pro Sekunde in einen Wärmetauscher 236 eingeführt, um seine Wärme an ein Grundwasser abzugeben, das von dem Haupt-Grundwasserstrom in der Leitung 102 über eine Zweigleitung 238 und eine Abzweigpumpe 240 abgezweigt worden ist. Das abgezweigte Grundwasser nimmt dann im Wesentlichen die Wärme des Verflüssiger-Ablaufs innerhalb des Wärmetauschers 236 ab, so dass vorgewärmtes Grundwasser beispielsweise bei einer Temperatur von 33°C in das Düsenrohr 230 eingebracht wird, um durch die im Vergleich zum Grundwasser hohen Temperatur die Blasensiedung im Verdampfer wirksam zu triggern bzw. zu unterstützen. Dagegen liefert der Wärmetauscher über eine Ablaufleitung 238 relativ stark abgekühltes Ablaufwasser, das dann über eine Ablaufpumpe 240 der Kanalisation zugeführt wird. Aufgrund der Kombination aus Abzweigleitung 238 und Abzweigpumpe 240 und Wärmetauscher 236 wird im Verdampfer nur Grundwasser verwendet bzw. eingebracht, ohne dass es mit einem anderen Medium in Berührung war. Eine wasserrechtliche Relevanz existiert somit bei dem in Fig. 4c gezeigten Ausführungsbeispiel nicht.

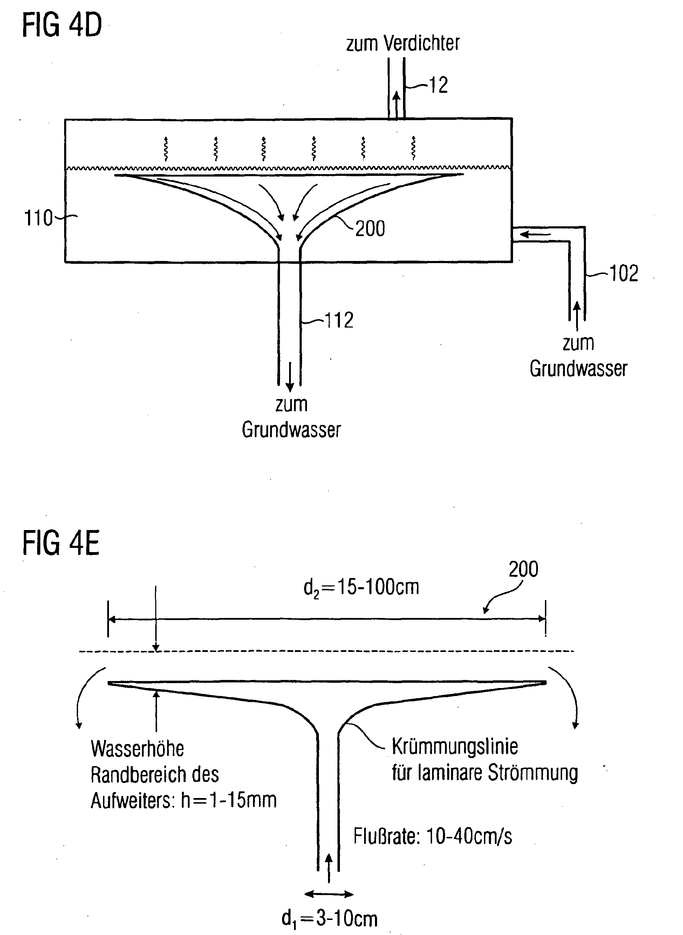

Fig. 4d zeigt eine alternative Implementierung des Verdampfers mit Randspeisung. Hier ist, im Gegensatz zu Fig. 2, der Aufweiter 200 des Verdampfers unterhalb des Wasserspiegels 110 im Verdampfer angeordnet. Dies führt dazu, dass Wasser "von außen" in die Mitte des Aufweiters fließt, um dann in einer Mittelleitung 112 zurückgeführt zu werden. Während die Mittelleitung in Fig. 2 zur Speisung des Verdampfers gedient hat, dient sie in Fig. 4d nunmehr zum Ableiten des nicht verdampften Grundwassers. Dagegen hat die in Fig. 2 gezeigte Leitung 112 zur Abfuhr von nicht verdampftem Grundwasser gedient. In Fig. 4d fungiert diese Leitung am Rand dagegen als Grundwasserzuführung.

Fig. 4e zeigt eine bevorzugte Implementierung des Aufweiters 200, wie er im Verdampfer eingesetzt werden kann, oder des Aufweiters, wie er z.B. auch im Verflüssiger eingesetzt werden kann, und wie er beispielsweise in Fig. 2 oder Fig. 3a bzw. 3b gezeigt ist. Der Aufweiter ist derart vorzugsweise ausgeführt, dass sein kleiner Durchmesser vorzugsweise in der Mitte der "großen" Aufweiter-Fläche in den Aufweiter eintritt. Dieser Durchmesser dieses Zulaufs bzw. Ablaufs (in Fig. 4d) liegt vorzugsweise zwischen 3 und 10 cm und bei besonders bevorzugten Ausführungsbeispielen zwischen 4 und 6 cm.

Der große Durchmesser d₂ des Aufweiters liegt bei bevorzugten Ausführungsbeispielen zwischen 15 und 100 cm und ist bei besonders bevorzugten Ausführungsbeispielen kleiner als 25 cm. Die kleine Ausführung des Verdampfers ist möglich, wenn effiziente Maßnahmen zur Triggerung und Unterstützung der Blasensiedung eingesetzt werden, wie sie vorstehend erläutert worden sind. Zwischen dem kleinen Radius d₁ und dem großen Radius d₂ befindet sich ein Krümmungsbereich des Aufweiters, der vorzugsweise so gestaltet ist, dass sich in diesem Bereich eine laminare Strömung ergibt, die von einer schnellen Flussrate, für vorzugsweise im Bereich von 7 bis 40 cm pro Sekunde liegt, auf eine relativ kleine Flussrate am Rand des Aufweiters abgesenkt wird. Starke Diskontinuitäten der Flussrate, wie beispielsweise Wirbel im Bereich der Krümmungslinie oder "Sprudeleffekte" oberhalb des Zulaufs, wenn von oben auf den Aufweiter gesehen wird, werden vorzugsweise vermieden, da sie gegebenenfalls Wirkungsgrad-beeinträchtigend sein können.

Bei besonders bevorzugten Ausführungsbeispielen hat der Aufweiter eine Form, die dazu führt, dass die Höhe des Wasserstands über der Aufweiter-Oberfläche kleiner als 15 mm ist und vorzugsweise zwischen 1 und 5 mm liegt. Es wird daher bevorzugt, einen Aufweiter 200 einzusetzen, der so ausgebildet ist, dass in mehr als 50 % der Fläche des Aufweiters, wenn derselbe von oben betrachtet wird, eine Wasserhöhe existiert, die kleiner als 15 mm ist. Damit kann über dem gesamten Bereich eine effiziente Verdampfung sichergestellt werden, die im Hinblick auf ihre Effizienz noch besonders erhöht wird, wenn Maßnahmen zur Triggerung der Blasensiedung eingesetzt werden.

Die erfindungsgemäße Wärmepumpe dient somit zur effizienten Wärmeversorgung von Gebäuden und benötigt kein Arbeitsmittel mehr, das einen Weltklima-schädigenden Einfluss hat. Erfindungsgemäß wird Wasser unter sehr geringem Druck verdampft, durch eine oder mehrere hintereinander angeordnete Strömungsmaschinen verdichtet und wieder verflüssigt zu Wasser. Die transportiere Energie wird zum Heizen benutzt. Erfindungsgemäß wird eine Wärmepumpe verwendet, die bevorzugt ein offenes System darstellt. Offenes System bedeutet hier, dass Grundwasser oder ein anderes verfügbares Wärmeenergie-tragendes wässriges Medium unter geringem Druck verdampft, verdichtet und verflüssigt wird. Das Wasser wird direkt als Arbeitsmittel verwendet. Die enthaltene Energie wird also nicht an ein geschlossenes System übertragen. Das verflüssigte Wasser wird vorzugsweise direkt im Heizungssystem verwendet und anschließend dem Grundwasser wieder zugeführt. Um das Heizsystem kapazitiv zu entkoppeln, kann es ebenso über einen Wärmetauscher abgeschlossen werden.

Die Effizienz und Nützlichkeit der vorliegenden Erfindung wird anhand eines Zahlenbeispiels dargestellt. Wenn von einem Jahreswärmebedarf von 30.000 kWh ausgegangen wird, müssen erfindungsgemäß hierfür etwa maximal 3750 kWh elektrischer Strom für den Betrieb der Strömungsmaschine aufgewendet werden, da die Strömungsmaschine nur etwa ein Achtel des gesamten Wärmebedarfs liefern muss.

Das Achtel ergibt sich daher, dass nur bei extremster Kälte ein Sechstel aufgewendet werden muss, und z. B. bei Übergangstemperaturen wie im März oder Ende Oktober der Wirkungsgrad bis auf einen Wert größer 12 steigen kann, so dass im Mittel über das Jahr maximal ein Achtel aufgewendet werden muss.

Bei Stromkosten von etwa 10 Cent pro kWh, die für Strom erreicht werden können, wenn Strom gekauft wird, für den das Kraftwerk keine Unterbrechungsfreiheit garantieren muss, entspricht dies etwa jährlichen Kosten von 375 Euro. Wenn man 30.000 kWh mit Öl erzeugen möchte, würde man etwa 4000 l brauchen, was bei derzeitigen Ölkosten, die in Zukunft sehr wahrscheinlich nicht fallen werden, einem Preis von 2800 Euro entsprechen würde. Erfindungsgemäß kann man daher pro Jahr 2425 Euro einsparen! Ferner sei auch darauf hingewiesen, dass im Vergleich zur Verbrennung von Öl oder Gas zu Zwecken der Heizung durch das erfindungsgemäße Konzept bis zu 70 % der Menge an freigesetztem CO₂ eingespart wird.

Zur Reduktion der Herstellungskosten und auch zur Reduktion der Wartungs- und Montagekosten wird es bevorzugt, die Gehäuse des Verdampfers, des Verdichters und/oder des Verflüssigers und auch besonders das Radialrad der Strömungsmaschine aus Kunststoff und insbesondere aus Spritzguss-Kunststoff auszuführen. Kunststoff eignet sich gut, da Kunststoff bezüglich Wasser korrosionsresistent ist und erfindungsgemäß vorteilhafterweise die maximalen Temperaturen im Vergleich zu konventionellen Heizungen deutlich unter den Verformungstemperaturen einsetzbarer Kunststoffe liegen. Ferner ist die Montage besonders einfach, da im System aus Verdampfer, Verdichter und Verflüssiger Unterdruck herrscht. Damit werden an die Dichtungen wesentlich weniger Anforderungen gestellt, da der gesamte Atmosphärendruck dabei hilft, die Gehäuse dicht zu halten. Kunststoff eignet sich ferner besonders gut, da an keiner Stelle im erfindungsgemäßen System hohe Temperaturen auftreten, die den Einsatz von teuren Spezialkunststoffen, Metall oder Keramik erforderlich machen würden. Durch Kunststoff-spritzguss kann auch die Form des Radialrads beliebig optimiert und dennoch trotz komplizierter Form einfach und kostengünstig hergestellt werden.

## Patentansprüche

1. Wärmepumpe mit folgenden Merkmalen:
einer Verdampfervorrichtung (10) mit:
einem Wasserverdampfer (10) zum Verdampfen von Wasser als Arbeitsflüssigkeit, um einen Arbeitsdampf zu erzeugen, wobei der Wasserverdampfer einen Verdampfungsraum (100) aufweist und ausgebildet ist, um in dem Verdampfungsraum einen Verdampfungsdruck kleiner als 20 hPa zu erzeugen, so dass das Wasser bei Temperaturen unter 18°C verdampft,
einem Verdichter (16), der mit dem Verdampfer (10) gekoppelt ist, zum Verdichten des Arbeitsdampfes, wobei der Verdichter als Strömungsmaschine ausgeführt ist und ferner ausgebildet ist, um den Arbeitsdampf auf einen Arbeitsdruck höher als 5 hPa über dem Verdampfungsdruck zu verdichten; und
einem Verflüssiger (18) zum Verflüssigen eines verdichteten Arbeitsdampfes, wobei der Verflüssiger ausgebildet ist, um eine bei der Verflüssigung erhaltene Wärme an ein Heizsystem auszugeben.
**dadurch gekennzeichneit, dass** der Wasserverdampfer (10) folgende Merkmale aufweist:
einen Aufweiter (108), der sich in dem Verdampfungsraum auf wenigstens das dreifache eines Durchmessers einer Zuleitung zu dem Verdampfungsraum aufweitet;
eine Auffangvorrichtung (110), die ausgebildet ist, um über einen Rand des Aufweiters (108) überlaufen- de Arbeitsflüssigkeit aufzufangen; und
eine Ablaufeinrichtung (112), die ausgebildet ist, um die überlaufende Arbeitsflüssigkeit abzuführen;

2. Wärmepumpe nach Anspruch 1, bei der die Verdampfervorrichtung eine Turbine (150) aufweist, über die ein Druck einer hinlaufenden Arbeitsflüssigkeit reduziert wird, und die dabei Energie aus der Arbeitsflüssigkeit entnimmt, wobei die Turbine (150) ferner mit einer Pumpe (152) wirkungsmäßig gekoppelt ist, um eine rücklaufende Arbeitsflüssigkeit von dem Druck in dem Verdampfungsraum auf den Druck der hinlaufenden Arbeitsflüssigkeit zu bringen, wobei die wirkungsmäßige Kopplung (154) so ausgebildet ist, dass die Pumpe (152) wenigstens einen Teil der Energie verwendet, die die Turbine entnommen hat.

3. Wärmepumpe nach Anspruch 1, bei der die Ablaufeinrichtung (112) mit einer Flusssteuerungseinrichtung (114) gekoppelt ist, wobei die Flusssteuerungseinrichtung (114) steuerbar ist, um einen Pegel der überlaufenden Arbeitsflüssigkeit in der Auffangvorrichtung (110) in einem vorbestimmten Bereich zu halten.

4. Wärmepumpe nach einem der vorhergehenden Ansprüche, bei der die Verdampfervorrichtung (10) einen Gasabscheider aufweist, der ausgebildet ist, um wenigstens einen Teil eines Gases, das in dem zu verdampfenden Wasser gelöst ist, aus dem zu verdampfenden Wasser zu entfernen, so dass der entfernte Teil des Gases nicht über den Verdampfungsraum von dem Verdichter angesaugt wird.

5. Wärmepumpe nach Anspruch 4, bei der der Gasabscheider angeordnet ist, um den entfernten Teil des Gases einem nicht verdampften Wasser zuzuführen, damit das Gas von dem nicht verdampften Wasser abtransportiert wird.

6. Wärmepumpe nach Anspruche 1 oder 2, bei der die Verdampfervorrichtung (10) ferner folgende Merkmale aufweist:
den Aufweiter (200), der sich in dem Verdampfungsraum auf wenigstens das Dreifache eines Durchmessers eines Ablaufs (112) außerhalb des Verdampfungsraums (100) aufweitet;
eine Auffangvorrichtung, die ausgebildet ist, um die dem Verdampfungsraum zugeführte Arbeitsflüssigkeit aufzunehmen; und
eine Zulaufeinrichtung, um die Auffangvorrichtung mit Grundwasser zu speisen;
wobei der Aufweiter so in dem Verdampfungsraum angeordnet ist, dass Arbeitsflüssigkeit über einen Rand des Aufweiters mit hohem Durchmesser zu einem Bereich des Aufweiters mit niedrigem Durchmesser und von dort über eine Ableitung abfließt.

7. Wärmepumpe nach Anspruch 2, bei der der Verflüssiger (18) einen Ablauf (22) zum Abführen von verflüssigter Arbeitsflüssigkeit aufweist, wobei der Ablauf an einer Kopplungsstelle (194) mit einem Steigrohr (102) oder einem Rücklaufrohr (113) gekoppelt ist, wo ein Flüssigkeitsdruck in dem Steigrohr oder Rücklaufrohr (113) kleiner oder gleich einem Druck an dem Ablauf (22) ist.

8. Wärmepumpe nach einem der Ansprüche 2 oder 7, bei der der Verflüssiger (18) einen Ablauf (22) zum Abführen von verflüssigter Arbeitsflüssigkeit aufweist, wobei der Ablauf an einer Kopplungsstelle (194) mit einem Steigrohr (102) oder einem Rücklaufrohr (113) gekoppelt ist, wobei zwischen dem Ablauf (22) aus dem Verflüssiger (18) und der Kopplungsstelle (194) eine Druckausgleichseinrichtung (192) angeordnet ist, wobei die Druckausgleichseinrichtung (192) ausgebildet ist, um einen Druck des aus dem Verflüssiger (18) abgeführten Wassers derart zu steuern, dass das Wasser in das Steigrohr (102) oder das Rücklaufrohr (192) eintritt.

9. Verfahren zum Pumpen von Wärme, mit folgenden Merkmalen:
Verdampfen (10) von Wasser als Arbeitsflüssigkeit mit einem Wasserverdampfer (10), um einen Arbeitsdampf zu erzeugen, wobei der Arbeitsdampf bei einem Verdampfungsdruck kleiner als 20 hPa erzeugt wird, so dass das Wasser bei Temperaturen unter 18°C verdampft, wobei der Wasserverdampfer (10) folgende Merkmale aufweist:
einen Aufweiter (108), der sich in dem Verdampfungsraum auf wenigstens das dreifache eines Durchmessers einer Zuleitung zu dem Verdampfungsraum aufweitet;
eine Auffangvorrichtung (110), die ausgebildet ist, um über einen Rand des Aufweiters (108) überlaufende Arbeitsflüssigkeit aufzufangen; und
eine Ablaufeinrichtung (112), die ausgebildet ist, um die überlaufende Arbeitsflüssigkeit abzuführen;
strömungsmäßiges Verdichten (16) des Arbeitsdampfes, um den Arbeitsdampf auf einen Arbeitsdruck höher als 5 hPa über dem Verdampfungsdruck zu verdichten; und
Verflüssigen (18) eines verdichteten Arbeitsdampfes, um eine bei der Verflüssigung erhaltene Wärme an ein Heizsystem auszugeben.

## Claims

1. A heat pump comprising:
an evaporator device (10) comprising:
a water evaporator (10) for evaporating water as a working liquid to generate a working vapor, the water evaporator comprising an evaporation chamber (100) and being adapted to generate an evaporation pressure of less than 20 hPa within the evaporation chamber, so that the water will evaporate at temperatures below 18°C,
a compressor (16) coupled to the evaporator (10) for compressing the working vapor, the compressor being adapted as a continuous flow machine and further being adapted to compress the working vapor to a working pressure of more than 5 hPa above the evaporation pressure; and
a liquefier (18) for liquefying a compressed working vapor, the liquefier being adapted to output a heat which has been acquired during the liquefaction to a heating system,
**characterized in that** the water evaporator (10) further comprises
an expander (108) which expands within the evaporation chamber to at least three times a diameter of a feed to the evaporation chamber;
a reception apparatus (110) adapted to receive any working liquid overflowing over an edge of the expander (108); and
a drain (112) adapted to carry off the overflowing working liquid.

2. The heat pump as claimed in claim 1, wherein the evaporator device comprises a turbine (150), via which a pressure of an upstreaming working fluid is reduced, and which extracts energy from the working liquid in the process, the turbine (150) further being operatively coupled to a pump (152) to bring a downstreaming working liquid from the pressure present within the evaporation chamber to the pressure of the upstreaming working fluid, the operative coupling (154) being adapted such that the pump (152) uses at least part of the energy the turbine has extracted.

3. The heat pump as claimed in claim 1, wherein the drain (112) is coupled to a flow controller (114), the flow controller (114) being controllable to maintain a level of the overflowing working liquid within the reception apparatus (110) within a predefined range.

4. The heat pump as claimed in one of the preceding claims, wherein the evaporator device (10) comprises a gas separator adapted to remove at least part of a gas dissolved in the water to be evaporated from the water to be evaporated, so that the removed part of the gas is not sucked in by the compressor via the evaporation chamber.

5. The heat pump as claimed in claim 4, wherein the gas separator is arranged to feed the removed part of the gas to non-evaporated water so that the gas is transported off by the non-evaporated water.

6. The heat pump as claimed in claim 1 or 2, wherein the evaporator device (10) further comprises:
an expander (200) which expands, within the evaporation chamber, to at least three times a diameter of the drain (112) outside the evaporation chamber;
a reception apparatus adapted to receive the working liquid fed to the evaporation chamber; and
an inflow to supply the reception apparatus with ground water;
wherein the expander is arranged within the evaporation chamber such that the working fluid flows off, over an edge of the expander comprising a large diameter, to an area of the expander comprising a low diameter, and from there to a drain.

7. The heat pump as claimed in claim 2, wherein the liquefier (18) comprises a drain (22) for draining off liquefied working liquid, the drain being coupled, at a coupling position (194), to the riser pipe (102) or to a backflow pipe (113), where a liquid pressure within the riser pipe or the backflow pipe (113) is smaller than or equal to a pressure present at the drain (22).

8. The heat pump as claimed in claim 2 or 7, wherein the liquefier (18) comprises a drain (22) for draining off liquefied working liquid, the drain being coupled, at a coupling position (194), to the riser pipe (102) or to a backflow pipe (113), a pressure compensator (192) being arranged between the drain (22) from the liquefier (18) and the coupling position (194), the pressure compensator (192) being adapted to control a pressure of the water drained off from the liquefier (18) such that the water will enter into the riser pipe (102) or into the backflow pipe (192).

9. A method of pumping heat, comprising:
evaporating (10) water as a working liquid by a water evaporator (10) to generate a working vapor, the working vapor being generated at an evaporation pressure of less than 20 hPa, so that the water will evaporate at temperatures below 18°C, the water evaporator comprising
an expander (108) which expands in the evaporation chamber to at least three times a diameter of a feed line to the evaporation chamber;
a reception apparatus (110) adapted to receive any working liquid overflowing over an edge of the expander; and
a drain (112) adapted to carry off the overflowing working liquid;
compressing (16) the working vapor in terms of flow so as to compress the working vapor to a working pressure of more than 5 hPa above the evaporation pressure; and
liquefying (18) a compressed working vapor to output a heat which has been acquired during the liquefaction to a heating system.

## Revendications

1. Pompe à chaleur, aux caractéristiques suivantes:
un dispositif d'évaporation (10) avec:
un évaporateur d'eau (10) destiné à évaporer de l'eau comme liquide de travail, pour générer une vapeur de travail, l'évaporateur d'eau présentant une chambre d'évaporation (100) et étant réalisée pour générer dans la chambre d'évaporation une pression d'évaporation inférieure à 20 hPas, de sorte que l'eau s'évapore à des températures au-dessous de 18 °C,
un compacteur (16) couplé à l'évaporateur (10) destiné à compacter la vapeur de travail, le compacteur étant réalisé sous forme de machine à courant et étant réalisé par ailleurs pour compacter la vapeur de travail à une pression de travail supérieure à 5 hPas au-dessus de la pression d'évaporation; et
un liquéfacteur (18) destiné à liquéfier une vapeur de travail compactée, le liquéfacteur étant réalisé pour sortir vers un système de chauffage une chaleur obtenue lors de la liquéfaction,
**caractérisée par le fait que** l'évaporateur d'eau (10) présente les caractéristiques suivantes:
un élargisseur (108) qui s'élargit dans la chambre d'évaporation au moins à trois fois un diamètre d'une conduite d'alimentation vers la chambre d'évaporation;
un dispositif collecteur (110) qui est réalisé pour collecter le liquide de travail débordant par-dessus un bord de l'élargisseur (108); et
un moyen d'écoulement (112) qui est réalisé pour évacuer le liquide de travail débordant.

2. Pompe de chaleur selon la revendication 1, dans lequel le dispositif d'évaporation présente une turbine (150) par l'intermédiaire de laquelle est réduite une pression d'un liquide de travail entrant, et qui prélève de l'énergie du liquide de travail, la turbine (150) étant par ailleurs couplée en fonctionnement à une pompe {152), pour amener le liquide de travail retournant de la pression dans la chambre d'évaporation à la pression du fluide de travail entrant, le couplage en fonctionnement (154) étant réalisé de sorte que la pompe (152) utilise au moins une partie de l'énergie que la turbine a prélevée.

3. Pompe de chaleur selon la revendication 1, dans laquelle le moyen d'écoulement (112) est couplé à un moyen de réglage d'écoulement (114), le moyen de réglage d'écoulement (114) pouvant être réglé pour maintenir un niveau du liquide de travail débordant dans le dispositif collecteur (110) dans une plage prédéterminée.

4. Pompe de chaleur selon l'une des revendications précédentes, dans laquelle le dispositif d'évaporation (10) présente un séparateur de gaz qui est réalisé pour éliminer de l'eau à évaporer au moins une partie d'un gaz qui est dissous dans l'eau à évaporer, de sorte que la partie du gaz éliminée ne soit pas aspirée par le compacteur par l'intermédiaire de la chambre d'évaporation.

5. Pompe de chaleur selon la revendication 4, dans laquelle le séparateur de gaz est disposé de manière à alimenter la partie du gaz éliminée vers l'eau non évaporée, pour que le gaz soit évacué par l'eau non évaporée.

6. Pompe de chaleur selon les revendications 1 ou 2, dans laquelle le dispositif d'évaporation (10) présente par ailleurs les caractéristiques suivantes:
l'élargisseur (200) qui s'élargit dans la chambre d'évaporation à au moins trois fois un diamètre d'une évacuation (112) en-dehors de la chambre d'évacuation (100);
un dispositif collecteur qui est réalisé pour collecter le liquide de travail alimenté vers la chambre d'évaporation; et
un moyen d'alimentation destiné à alimenter le dispositif collecteur en eau souterraine;
l'élargisseur étant disposé dans la chambre d'évaporation de sorte que le fluide de travail s'écoule par-dessus un bord de l'élargisseur de diamètre inférieur et, de là, via un conduit d'évacuation.

7. Pompe de chaleur selon la revendication 2, dans laquelle le liquéfacteur (18) présente un écoulement (22) destiné à évacuer le liquide de travail liquéfié, l'écoulement étant couplé, à un point de couplage (194), à un tuyau montant (102) ou un tuyau de retour (113), où une pression de liquide dans le tuyau montant ou le tuyau de retour (113) est inférieure ou égale à une pression à l'écoulement (22).

8. Pompe de chaleur selon l'une des revendications 2 ou 7, dans laquelle le liquéfacteur (18) présente un écoulement (22) destiné à évacuer le liquide de travail liquéfié, l'écoulement étant couplé, à un point de couplage (194), à un tuyau montant (102) ou un tuyau de retour (113), entre l'écoulement (22) du liquéfacteur (18) et le point de couplage (194) étant disposé un moyen de compensation de pression (192), le moyen de compensation de pression (192) étant réalisé pour régler une pression de l'eau évacuée du liquéfacteur (18) de sorte que l'eau entre dans le tuyau montant (102) ou le tuyau de retour (192).

9. Procédé de pompage de chaleur, aux caractéristiques suivantes:
évaporer (10) de l'eau comme liquide de travail par un évaporateur d'eau (10), pour générer une vapeur de travail, la vapeur de travail étant générée à une pression d'évaporation inférieure à 20 hPas, de sorte que l'eau s'évapore à des températures au-dessous de 18°C, l'évaporateur d'eau (10) présentant les caractéristiques suivantes:
un élargisseur (108) qui s'élargit dans la chambre d'évaporation au moins à trois fois un diamètre d'une conduite d'alimentation vers la chambre d'évaporation;
un dispositif collecteur (110) qui est réalisé pour collecter le liquide de travail débordant par-dessus un bord de l'élargisseur (108); et
un moyen d'écoulement (112) qui est réalisé pour évacuer le liquide de travail débordant,
compacter en courant (16) la vapeur de travail, pour compacter la vapeur de travail à une pression de travail supérieure à 5 hPas au-dessus de la pression d'évaporation; et
liquéfier (18) une vapeur de travail compactée, pour sortir vers un système de chauffage une chaleur obtenue lors de la liquéfaction.
